(19) Europäisches Patentamt
European Patent Office
Office européen des brevets

(11) EP 0 519 450 B1

# (12) EUROPEAN PATENT SPECIFICATION

(45) Date of publication and mention of the grant of the patent: **18.12.1996 Bulletin 1996/51**

(51) Int. Cl.[6]: **C08F 8/30**, C08F 8/32

(21) Application number: **92110268.7**

(22) Date of filing: **17.06.1992**

## (54) Polymer compounds containing sterically hindered amino groups suitable to be used as stabilizers, and polymer compositions comprising them

Als Stabilisatoren geeignete polymere Verbindungen, die sterisch gehinderte Aminogruppen enthalten und diese enthaltende polymere Zusammensetzungen

Polymères contenant des groupes amino à empêchement stérique, utilisables comme stabilisants et compositions de polymères les contenant

(84) Designated Contracting States:
**BE DE FR GB IT NL**

(30) Priority: **17.06.1991 IT MI911660**

(43) Date of publication of application:
**23.12.1992 Bulletin 1992/52**

(73) Proprietor: **MONTELL NORTH AMERICA INC.**
**New Castle County Delaware (US)**

(72) Inventors:
- **Foa', Marco, Dr.**
  **I-28100 Novara (IT)**
- **Casagrande, Francesco, Dr.**
  **I-28060 San Nazzaro Sesia, Novara (IT)**
- **Giannini, Umberto, Dr.**
  **I-20133 Milano (IT)**
- **Caselli, Giancarlo, Dr.**
  **I-44100 Ferrara (IT)**

(74) Representative: **Zumstein, Fritz, Dr. et al**
**Patentanwälte,**
**Dr. F. Zumstein,**
**Dipl.-Ing. F. Klingseisen,**
**Bräuhausstrasse 4**
**80331 München (DE)**

(56) References cited:
**EP-A- 0 001 803** **EP-A- 0 001 835**
**EP-A- 0 070 386** **EP-A- 0 218 298**
**EP-A- 0 303 987** **US-A- 4 520 171**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 519 450 B1

## Description

The present invention concerns a new class of polymer compounds containing sterically hindered amino groups, capable of acting as stabilizers for organic materials, such as polymers, and polymer compositions comprising them.

It is well known that polymer substances, such as polyolefins for example, have a tendency to degrade rapidly once they are exposed to air, or oxidizing agents in general, and light. Said degradation, which brings to a deterioration of their physical characteristics, such as their mechanical properties and color for example, increases by being exposed to solar light or other sources of UV radiation. Light stabilizers are used in order to counteract this phenomenon.

Various classes of compounds that act as light stabilizers are known in the art, and one of them is represented by compounds containing sterically hindered amino groups ("HALS": hindered amine light stabilizers), where the group, which is considered active in the stabilization process, is a substituted polyalkyl piperidine group.

Some of these compounds are described in published European patent application EP 176 106 and US patent 4,056,507. An example of said HALS is the compound marketed by Ciba Geigy under the Tinuvin 770 trade mark, which is widely used in the industry especially as light stabilizer in the field of molded polymer articles destined, for example, for the automotive industry.

However, some of the compounds found within said class have proven not to be very effective, and, therefore, not very interesting from a practical point of view. One of the reasons for said low effectiveness is their volatility, since this causes a loss of stabilizer during the high temperature processes to which the polymer is subjected during the various manufacturing steps. Another cause of said ineffectiveness is their poor compatibility e.g. due to different structural characteristics with the matrix of the polymer to be stabilized, thus causing the "blooming" phenomenon, i.e. the migration of the stabilizer on the surface with the consequent loss of same and deterioration of the aesthetic characteristics of the articles.

Polymeric HALS have been synthesized to solve the volatility problem, said HALS being obtained by way of polycondensation between diamines or diols containing the substituted polyalkyl piperidine group and bifunctional organic compounds, such as dihalogen derivatives or bicarboxylic acid diesters for example. Examples of this class of HALS are the following commercially available compounds: Chimassorb 994, Tinuvin 622 and Spinuvex A 36 all marketed by Ciba Geigy, and Cyasord UV 3346 marketed by American Cyanamid. However, said compounds have the disadvantage, at least in some cases, of giving poor results from a stabilization point of view also because of their poor compatibility with the matrix of the polymer to be stabilized. These HALS are used mainly in the stabilization of polymer films and fibers.

Polymer HALS have also been obtained by way of homopolymerization or copolymerization of derivatives of polyalkyl piperidine containing double bonds, in the presence of radical initiators. Examples of said class of compounds are given in US patents 4,487,887; 4,404,301; 4.499.220; 4,487,900; 4,294,949; and 4,435,555. Said polymer HALS, especially when their molecular weight is high, are scarcely compatible with the matrix of the polymer to be stabilized, disperse unevenly in it, and therefore, their effectiveness is poor.

Likewise, the polymers obtained by incorporating the polyalkyl piperidine group in particular polymers, such as polyurethanes (see German published patent application 2,719,132), polyethers (see US patent 3,974,127), polyether esters (see US patent 4,136,090), polyesters (see US patent 4,413,076), polyphosphazenes (see US patent 4,451,400) and polysiloxanes (see published European patent applications EP 263 561 and 343 717) are also compatible and therefore hardly effective.

Another class of polymer HALS is represented by the compounds where the group containing the polyalkyl piperidine is bonded to a polyolefin matrix; the synthesis reaction of said compounds includes basically two reaction stages, i.e., the grafting of unsaturated compounds, such as for example epoxypropyl methacrylate or maleic anhydride, on said polyolefin, and the subsequent reaction of said grafted polymer with appropriate derivatives of polyalkyl piperidine (see Angew. Makromol. Chemie 1989, 171, page 153; US patent 4,520,171 and published european patent applications EP 303 281 and 303 987). However, said compounds present some disadvantages connected with the synthesis technique; in fact, the process of grafting reactive unsaturated molecules on a polymer is in itself somewhat critical, since some of its steps, such as eliminating the nonreacted unsaturated compound or its homopolymer present as a byproduct of the reaction, are difficult to control, and moreover it is difficult to obtain a homogeneous distribution of the grafted groups on the polymer matrix.

The Applicant has now found a new class of HALS, which are very effective in the light stabilization, can be easily prepared starting from commercial products and can be used just as successfully in the field of polymer films and fibers as well as in the field molded articles, such as articles destined for the automotive industry, for example.

Object of this invention are, in particular, polymer compounds containing sterically hindered amino groups which are suitable to be used as stabilizers, and have the general formula:

$$P(ZA')_n \qquad (I) \text{ or}$$

$$P_y(Z_2A_1)_m \qquad (II)$$

where:

- P is a polymer chain deriving essentially from a polymer selected from polymers or copolymers of olefins having a double bond in the end position and 2 to 10 carbon atoms, or polymers of conjugated diolefins having 4 or 5 carbon atoms, or their copolymers with the olefins specified above;
- n is a number from 1 to 20, preferably from 1 to 10;
- m is an integer from 1 to 3;
- y is an integer that for each value of m can assume values which range from 2 to 2+ (m-1);
- the ZA' groups, equal or different, directly bonded to the polymer chain, can be present in the end position, or inserted in the polymer chain or one of its branches, and are selected from the group comprising the following formulas:

a)

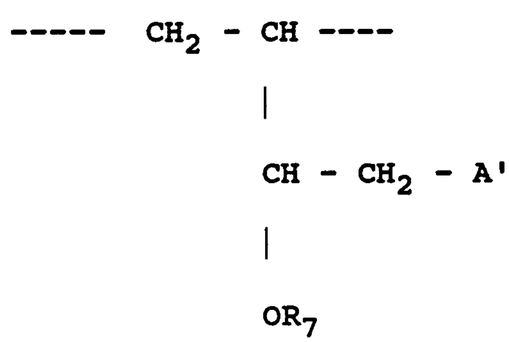

b)

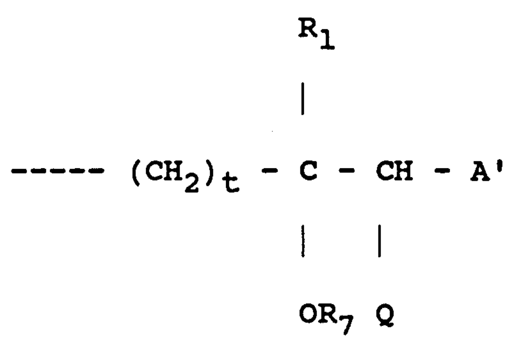

where:

| | |
|---|---|
| $R_1$ | is H, or a $C_1$-$C_8$ alkyl or a phenyl radical, preferably $R_1$ is H, $CH_3$ or $C_2H_5$; |
| t | can be 0 or 1; |
| Q | can be H or $-(CH_2)_t-$, depending on whether the ZA' group is terminal or internal; |
| $R_7$ | is H, a $C_1$-$C_3$ alkyl, a benzyl, or allyl radical, a $(CO)R_8$ radical where $R_8$ is a $C_1$-$C_6$ alkyl, $C_2$-$C_6$ alkenyl, $C_2$-$C_6$ alkynyl, $C_6$-$C_{10}$ aryl, $C_7$-$C_{13}$ aralkyl radical, or a $Si(R'_8)_3$, radical where $R'_8$ is a $C_1$-$C_4$ alkyl or a phenyl radical, preferably $R_7$ is H; and |
| A' | is a radical containing the structure of a polyalkyl piperidine, preferably the structure of the 2,2,6,6-tetramethylpiperidine; and |

- the groups

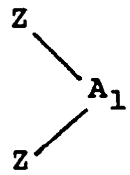

of formula (II) equal or different, are selected from the following formulas:

a')

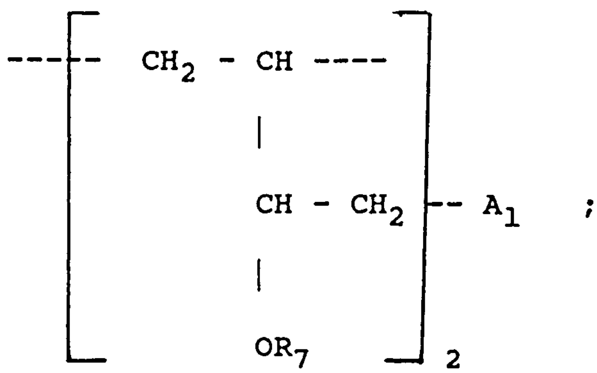

b')

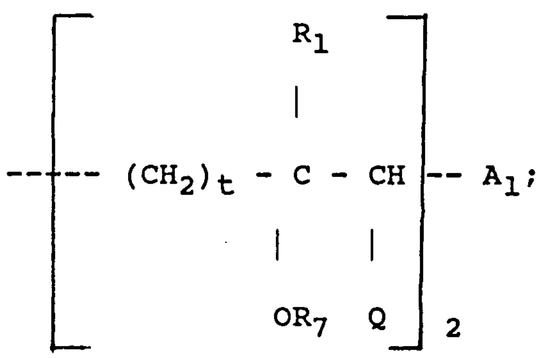

c')

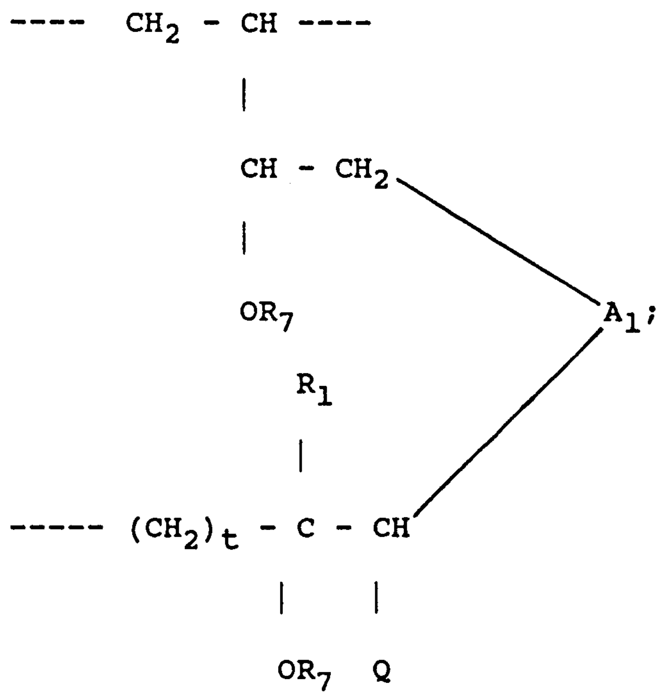

where $A_1$ is a bivalent group containing the structure of a polyalkyl piperidine, preferably of the 2,2,6,6-tetramethylpiperidine.

The A' group is selected from the following structures:

i)

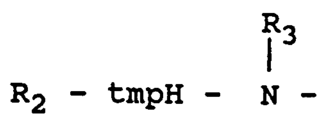

where:

- $R_2$ is H, a $CH_2$-CN radical, a $C_1$-$C_{12}$ alkyl, $C_3$-$C_{12}$ alkenyl radical, an acyl radical of the formula CO-$R_2$', where $R_2$' is a $C_1$-$C_{12}$ alkyl or a $C_7$-$C_{12}$ aralkyl radical optionally substituted with alkyl or alkoxy groups;
- $R_3$ can be H, a $C_1$-$C_{18}$ alkyl, $C_5$-$C_8$ cycloalkyl, $C_2$-$C_{12}$ alkoxyalkyl radical, a dialkylamine alkyl radical having up to 10 carbon atoms, or the - tmpH - $R_2$ group;
- tmpH represents the

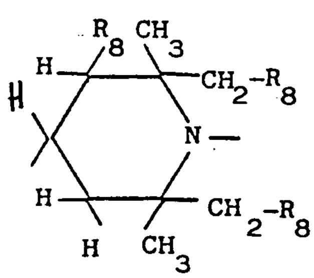

group where $R_2$ is bonded to the piperidine nitrogen atom, and $R_8$ is H or $CH_3$, preferably H;

ii) $R_2$ - tmpH - O -;

iii)

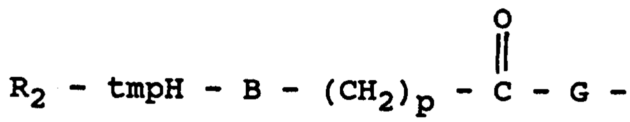

where B can be O, or $NR_3$; p is an integer from 1 and 4; G can be O, S, NH, NH - NH;

iv)

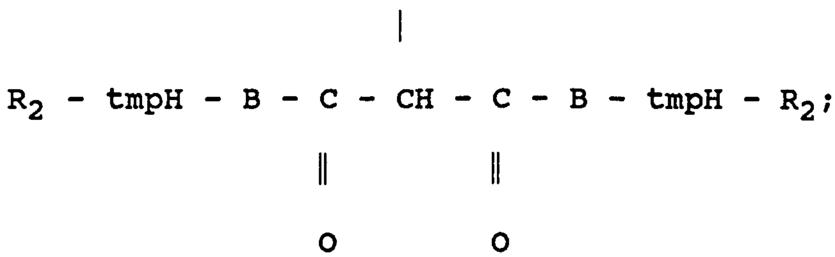

v)

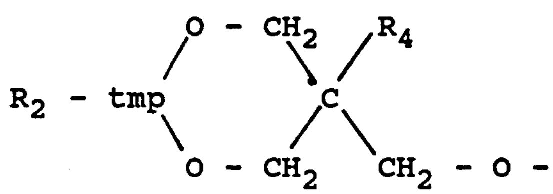

where $R_4$ is a $C_1$-$C_6$ alkyl radical, and tmp represents the

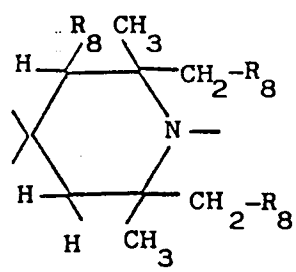

group, with $R_2$ bonded to the piperidine nitrogen atom;

vi)

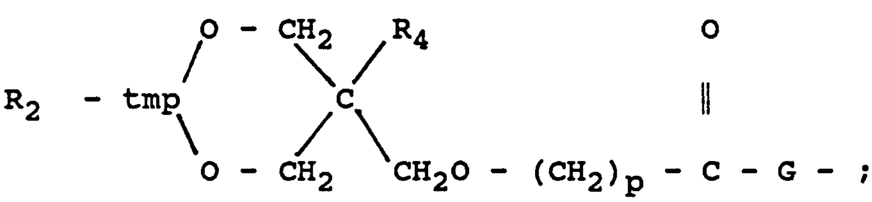

vii)

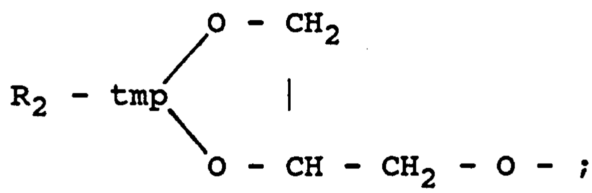

viii)

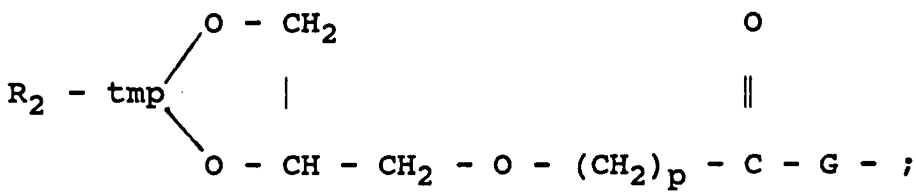

ix)

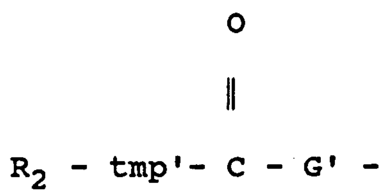

where G' is O, NH or NH-NH, and tmp' has the

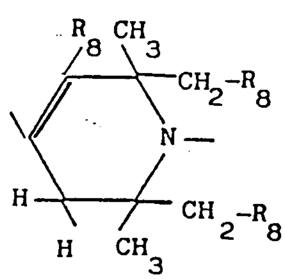

structure, with $R_2$ bonded to the piperidine nitrogen atom.

x)

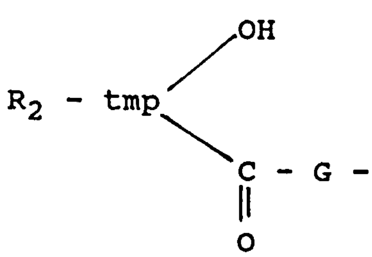

xi) a triazine type structure of the formula

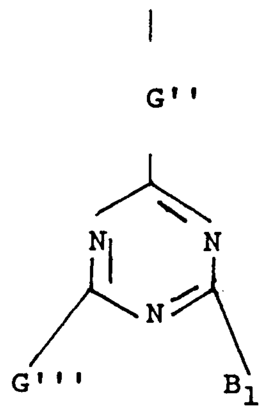

where G'' is NH or NH-NH; G''' is (i), (ii), (v) or (vii); and $B_1$ has the same meaning as G''', or is a D-$R_5$ group, where D is O, S, NH or $NR_7$, and where $R_5$ is a $C_1$-$C_{20}$ alkyl, $C_5$-$C_8$ cycloalkyl, $C_7$-$C_{12}$ aralkyl or $C_6$-$C_{12}$ aryl radical.

Preferably the A' group has an (i), (ii), (vi), (viii), or (xi) structure.

The $A_1$ group is selected from the following structures:

xii)

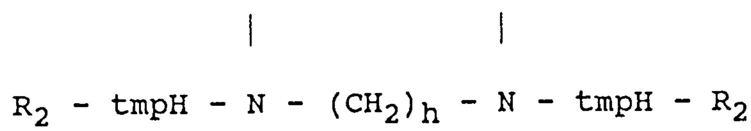

where h is an integer from 2 to 8;

xiii)

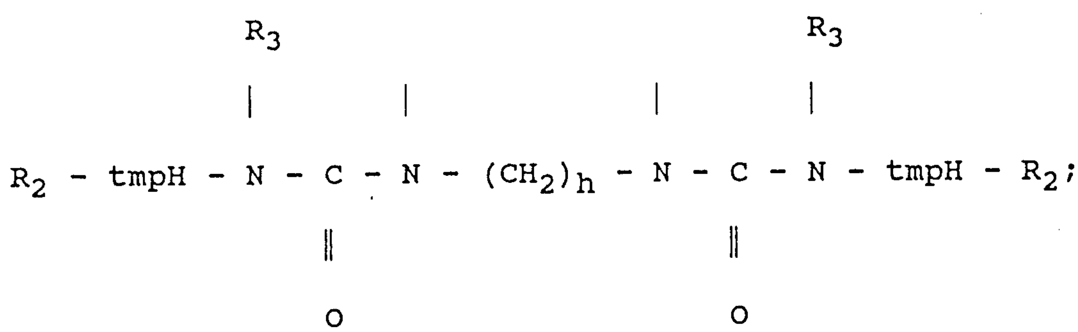

xiv)

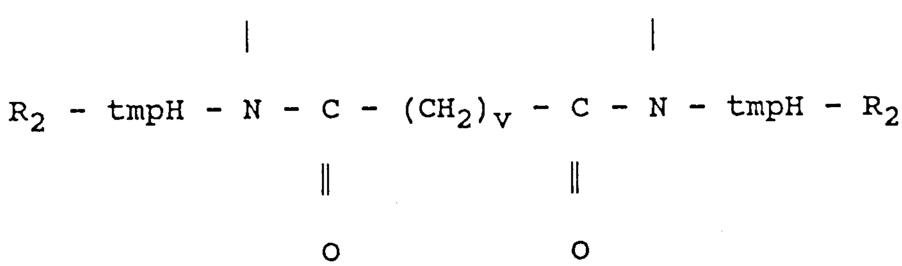

where v is an integer from 0 to 8;

xv)

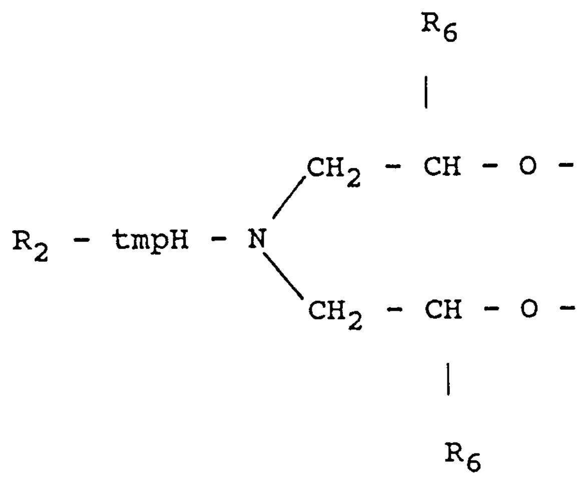

where $R_6$ is H or $CH_3$;

xvi)

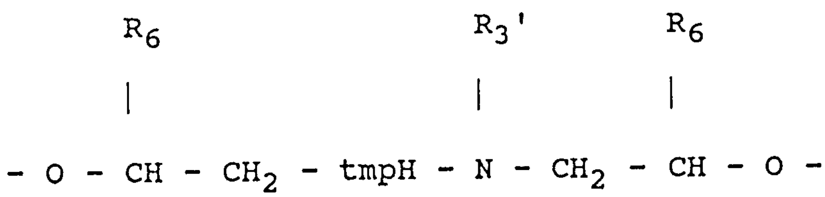

where the piperidine nitrogen of the tmpH group is bonded to the carbon atom of the $CH_2$ group, and $R_3'$ has the same meaning of $R_3$ if the latter is different from H and from the $R_2$ - tmpH group,

xvii)

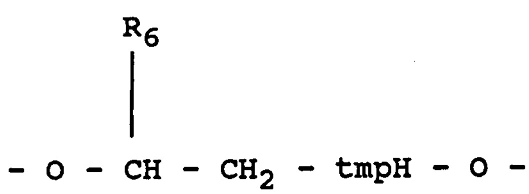

where the piperidine nitrogen of the tmpH group is bonded to the carbon atom of the $CH_2$ group;

xviii)

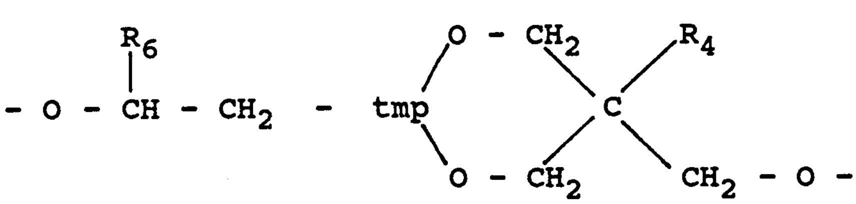

(xix)

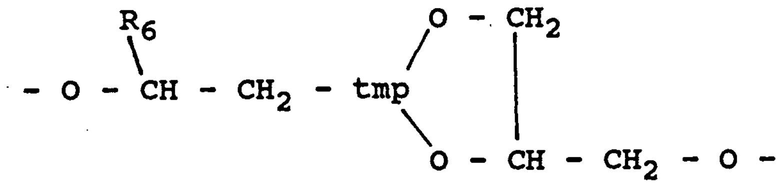

Preferably the $A_1$ group is selected from the (xi), (xiv), and (xvii) structures.

Preferably the polymer chain (P) derives from polyethylene, polypropylene, polybutene, polybutadiene, or their copolymers, and has a molecular weight from 200 to 10,000, more preferably from 300 and 5,000.

Z generally indicates a group deriving from the reaction of a functional Z' group, present on the polymer chain in the end position, inside the chain, or in one of its branches, where the compound contains the substituted polyalkyl piperidine group (A'H or $A_1H_2$).

In the case of the present invention, Z' is a

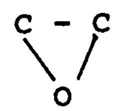

epoxide group, and Z assumes different meanings depending on the nature of A'H and $A_1H_2$, and of the position that the Z' group occupies in the polymer chain.

Examples of A'H and $A_1H_2$ compounds are: 4-amino-2,2,6,6-tetramethylpiperidine, 4-butylamino-2,2,6,6-tetramethylpiperidine, 2,2,6,6-tetramethylpiperidine-4-ol, 2-hydrazine-4,6-bis[2',2',6',6'-tetramethylpiperidinyl-4'-amino]1,3,5-triazine, and N,N'-bis-tetramethyl-piperidyl-1,6-hexamethylenediamine.

The compounds of formulas (I) and (II) are obtained, for example, starting from polymers or copolymers of olefins, or polymers of diolefins, or their copolymers with the monoolefins (described in more details in the definition of P) containing at least one epoxide group in the chain. Said polyolefins containing at least one epoxide group can in turn be prepared, for example, starting from the corresponding polyolefins containing at least one double bond in the chain.

For example, the starting material can be any polyolefin having at least one double bond, which can be internal, terminal, or in a lateral chain, and are represented by the formula:

$$R^{IV} - [X_a - Y_b]_{n1} - R' \qquad \text{(III)}$$

where X represents the

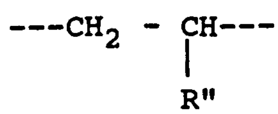

group
and Y represents the

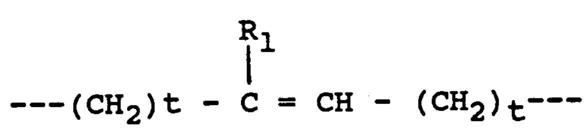

group
where:

t is an integer from 0 to 1,
a is an integer from 0 to 300,
b is an integer from 0 to 180,
n1 is an integer from 1 to 180, provided that $a+b \geqq 1$ and $a+b+n1 \geqq 10$,
$R^{IV}$ is H or a $C_1$-$C_{15}$ hydrocarbon radical,
R' equal or different from $R^{IV}$, has the same meaning as $R^{IV}$, and
R" is H, a $C_1$-$C_8$ hydrocarbon, or a phenyl, or a vinyl radical, provided that if R" is H, or a $C_1$-$C_8$ hydrocarbon, or a phenyl radical, b is $\geqq 1$.

Formula (III) polymers are available commercially, or can be obtained by known processes.

For example, formula (III) polymers having a molecular weight from 200 to 10,000, can be prepared by way of thermal degradation of commercially available polymers, as described in the "Die Makromol. Chemie" 1964, page 191, for example.

An alternative method of obtaining them is by way of polymerization under controlled conditions.

For example, polypropylene with a specific molecular weight, can be prepared by carrying out the polymerization using, as catalyst, bis-cyclopentadienyl zirconium dichloride and methyl alumoxane (as described in "Angew. Makromolec. Chemie" 1986 145/146, page 156), or bis-pentamethylcyclopentadienyl zirconium dichloride and methyl alumoxane (as described in Japanese patent 207 248, 1989), adequately regulating the partial pressure of the monomer and the polymerization temperature.

The epoxide group is introduced by direct functionalization of the polymer of formula (III) according to the following reaction diagram:

$$(III) \xrightarrow{[o]} R^{IV} - [X'_{a'} - Y'_{b'}]_{n'} - [X_{a''} - T_{b''}]_{n1-n'} - R' \quad (IV)$$

where:

a', a", b', and b" are integers which satisfy the relations $a'+a''=a$, and $b'+b''=b$ respectively, provided that $a'+b' \geqq 1$,
X' represents the

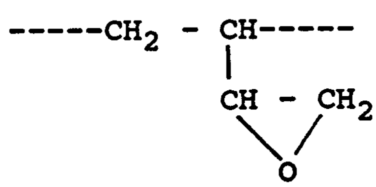

structure, and
Y' represents the

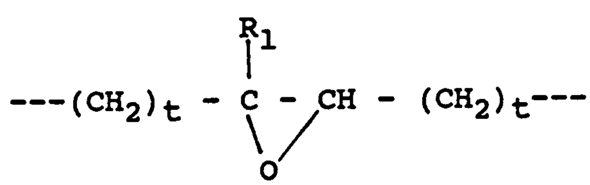

structure.

The epoxidation reaction described above can be carried out with any of the methods described in the literature for the epoxidation of unsaturated polymers, such as for example those reported in the "Journal of Polymer Science Pol. Chem. Ed.", 1990, 28, page 285.

The use of $H_2O_2$ in double phase with phosphotungstic acid ammonium salts as the catalyst (described in J. Org. Chem. 1988, 53, page 1553), is the preferred method.

The addition reaction of the polyalkyl piperidine derivatives on the epoxide groups contained in the polymers (IV) can be schematized by the following reactions:

$$(IV) + n\ A'H \rightarrow (I),$$

where n has the meaning already stated, and

$$(IV) + m\ A_1H_2 \rightarrow (II),$$

where A' and $A_1$ have the meaning stated above, and the $R_7$ radical of the (a), (b), (a'), (b') and (c') structures is H, i.e., containing at least one OH group per polymer chain.

Said reactions occur in the manner generally described in the literature for the reactivity of epoxide groups (see, for example, Synthesis, 1984, page 629).

In particular, said reaction can occur in the absence or presence of solvents or inert dispersing agents in the reaction conditions such as, for example, saturated or aromatic hydrocarbons, chlorinated solvents such as, for example, dichloroethane or tetrachloroethane, or ethers such as, for example, dimethoxyethane or the diglymes.

The piperidine derivative is added at least in the same molar quantity with respect to the epoxide groups present on the polymer chain; however, it is preferable to use an excess of at least 10% by weight.

If it should be necessary, acids or bases are added, depending on the nature of the piperidine derivative, in order to promote the addition reaction.

The reaction mixture is heated at a temperature which varies from 25 to 200°C depending on the nature of the piperidine compound and the presence of possible activators, and for a time that varies from 1 to 48 hours, depending on the preselected experimental conditions.

Once the reaction ends, the compounds of formula (I) or (II) are separated from the reaction mixture following normal organic chemistry techniques, such as, for example, extraction with solvent, column separation, or fractional distillation.

In order to obtain the compounds of formula (I) and (II) where the $R^7$ radical is a radical as described above except for H, the compounds prepared above (containing at least one OH group per polymer chain) can be caused to react with an $R_7$Alog compound, where Alog is a halogen atom selected from Cl, Br, and I.

Small quantities of the compounds which are the object of the present invention are used in order to provide light stabilization.

The quantity of said compounds which can be used to obtain the stabilizing effect is usually from 0.01 to 3 parts by weight per 100 parts by weight of the material to be stabilized.

In particular, object of the present invention are also the polymer compositions containing the compounds of formula (I) and (II) in quantities from 0.01 and 3 parts by weight per 100 parts of polymer material to be stabilized.

The polymers for which the compounds of formula (I) and (II) have been particularly effective as stabilizers include: polymers and copolymers, or their mixtures obtained by way of sequential polymerization, of olefins of the formula R'''-$CH=CH_2$, where R''' is a hydrogen atom, or a 1-6 carbon alkyl or an aryl radical.

In particular, said polymers and copolymers comprise:

1) isotactic, or mostly isotactic, polypropylene;
2) HDPE, LLDPE and LDPE polyethylene;
3) crystalline copolymers of propylene with ethylene and/or other α-olefins, such as for example 1-butene, 1-hexene, 1-octene, and 4-methyl-1-pentene;
4) elastomeric ethylene/α-olefin copolymers and ethylene/α-olefin/diene terpolymers containing minor portions of diene, where the α-olefin is preferably selected from propylene, 1-butene, 1-pentene, 1-hexene, 4-methyl-1-pentene, and 3-methyl-1-butene (examples of dienes which are more commonly present in the above mentioned elastomeric copolymers are butadiene, ethylidenenorbornene and 1,4-hexadiene);
5) heterophasic polymers obtained by way of sequential polymerization, made up of (A) a homopolymer fraction of the propylene, or one of the copolymers of paragraph (3) and a copolymer fraction (B) made up of elastomeric copolymers of paragraph (4).

Other examples of polymers for which the compounds of formulas (I) and (II) have proven effective as stabilizers are the following:

- diolefin or cycloolefin polymers, such as for example polyisoprene, polybutadiene, polycyclopentene, polynorbornene, and their mixtures, copolymers or terpolymers;
- copolymers of mono- and diolefins with other vinyl comonomers, such as for example ethylene-alkylmethacrylates and ethylene-vinyl acetates;
- polystyrene or polymethylstyrene, and copolymers of styrene or methylstyrene with other dienes or acrylic derivatives, such as for example styrene-butadiene and styrene-acrylonitrile copolymers, and corresponding terpolymers, such as for example styrene-butadiene-methacrylate terpolymers; mixtures between styrene copolymers and other

polymers such as polyacrylates, for example; block polymers containing styrene, such as styrene-ethylene-propylene-styrene, or styrene-butadiene-styrene, for example;

- polymers obtained by grafting styrene by itself or in combination with another acrylic monomer on unsaturated polymers, such as, for example, styrene grafted on polybutadiene, or styrene and acrylonitrile grafted on ethylene-propylene-diene terpolymers, and mixtures of said polymers with the ones described above;
- polymers containing halogen atoms, such as for example polychloroprene and chlorinated rubbers, or homopolymers and copolymers of epichlorohydrin or polyvinylidene fluoride, or copolymers of halogenated monomers, such as for example vinyl chloride-vinyl acetate copolymers;
- polymers obtained from unsaturated α-β acids, or their derivatives, such as for example polyacrylates, or polyacrylamides, or polyacrylonitrile; their copolymers with the `monomers mentioned above, such as for example acrylonitrile-butadiene, or acrylonitrile vinyl-halide copolymers;
- polymers obtained from amines and unsaturated alcohols, or their acyl derivatives, or from acetals, such as, for example, the polyvinyl acetate or maleate;
- homopolymers and copolymers obtained from cyclic ethers such as, for example, the polyethylene oxide;
- polyacetals such as polyoxymethylene, and copolymers with ethylene oxide;
- polyphenyl oxide and its mixtures with polystyrene;
- polyurethanes, polyamides, and copolyamides, such as, for example, the polyamide 6/6 or 6/10, and their copolymers with polyethers;
- polyureas, polyimides, and polyamides-imides;
- polyesters such as, for example, polyethylene terephthalate, and polycarbonates;
- polyheteroketones, polyheterosulfones, and polysulfones;
- cross-linked polymers, such as, for example, the phenolformaldehyde, or melamine-formaldehyde resins, or unsaturated polyesters with a vinyl compound as cross-linking agent; thermosetting acrylic resins, such as those derived from epoxyacrylates;
- any mixture of the polymer classes mentioned above;
  and
- natural polymers such as rubber, or cellulose with its chemical modifications.

Other organic materials to which the compounds of formula (I) can be added in order to promote light stabilization are: mineral, vegetable, or animal oils and their mixtures, such as paraffin waxes for example, or mixtures of synthetic esters with mineral oils, such as the ones used as plastifiers for polymers; synthetic or natural rubber aqueous emulsions.

The stabilizers which are the object of the present invention can be easily incorporated in the polymers by using conventional techniques at any stage of production which precedes the manufacture of the article. The stabilizer can be mixed with the polymer by using various techniques, such as dry mixing in powder form, or wet mixing in solutions, suspensions, or even as masterbatch. In these operations, the polymer can be used in powder, pellets, solution, suspension, or latex form.

The compounds which are the object of this invention can be used together with other conventional additives for polymers, such as, for example, anti-oxidants, stabilizers with a Ni base, pigments, reinforcing agents, plasticizers, anti-acids, anti-static agents, flame retardants, lubricants, corrosion inhibitors, metal complexing agents, peroxide scavengers, other basic co-stabilizers and nucleating agents.

In particular, examples of anti-oxidants which can be used together with the compounds of the present invention are:

- monophenol alkylates, such as 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-diclopentyl-4-methylphenol, 2-(α-methylcyclohexyl)-4,6-dimethylphenol, 2,6-octadecyl-4-methylphenol, 2,4,6-tricyclohexylphenol, 2,6-di-tert-butyl-4-methoxymethylphenol, and 2,6-di-nonyl-4-methylphenol.
- alkylated hydroquinones, such as 2,6-di-tert-butyl-4-methoxyphenol, 2,5-di-tert-butylhydroquinone, 2,5-di-tert-amylhydroquinone, and 2,6-di-phenyl-4-octadecyloxyphenol;
- thiodiphenyl hydroxylated ethers, such as for example 2,2'-thiobis(6-tert-butyl-4-methylphenol), 2,2'-thiobis(4-octylphenol), 4,4'-thiobis-(6-tert-butyl-3-methylphenol), and 4,4'-thiobis-(6-tert-butyl-2-methylphenol);
- alkylidenebisphenols, such as for example 2,2-methylenebis(6-tert-butyl-4-methylphenol), 2,2'-methylenebis(6-tert-butyl-4-ethylphenol), 2,2'-methylenebis[4-methyl-6-(α-methylcyclohexyl)phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-α-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecylmercaptobutane, ethylene glycol bis-[3,3-bis(3'-tert-butyl-4'-hydroxyphenyl)butyrate), bis (3-tert-butyl-4-hydroxy-5-methylphenyl)dicyclopentadiene, bis[2-(3'-tert-butyl-2'-hydroxy-5'-methylbenzyl)-6-tert-butyl-4-methylphenyl] terephthalate;

- benzyl compounds, such as for example 1,3,5-tris(3,5-di-tert-butyl-4-hydroxybenzyl)-2,4,6-trimethylbenzene, bis(3,5-di-tert-butyl-4-hydroxybenzyl)sulfide, isooctyl 3,5-di-tert-butyl-4-hydroxybenzyl mercaptoacetate, bis(4-tert-butyl-3-hydroxy-2,6-dimethylbenzyl)dithiol terephthalate, 1,3,5-tris(3,5-di-tert-butyl-4-hydroxybenzyl) isocyanurate, 1,3,5-tris(4-tert-butyl-3-hydroxy-2,6-dimethylbenzyl)isocyanurate, dioctadecyl 3,5-di-tert-butyl-4-hydroxybenzyl phosphonate, calcium salt of monoethyl 3,5-di-tert-butyl-4-hydroxybenzyl phosphonate, and 1,3,5-tris(3,5-dicyclohexyl-4-hydroxybenzyl)isocyanate;
- acylaminophenols, such as for example the 4-hydroxyanilide of lauric acid, the 4-hydroxyanilide of stearic acid, 1,2-bis (octylmercapto)-6-(3,5-di-tert-butyl-4-hydroxyaniline)-s-triazine, and octyl N-3,5-di-tert-butyl-4-hydroxyphenol)carbamate;
- the esters of β-(3,5-di-tert-butyl-4-hydroxyphenyl)propanoic acid with alcohols containing one or more hydroxy group, for example methanol, diethylene glycol, octadecanol, triethylene glycol, 1,6-hexanediol, pentaerythritol, neopentyl glycol, tris(hydroxyethyl)isocyanurate, thiodiethylene glycol, and the N,N'-bis(hydroxyethyl)diamide of oxalic acid;
- the esters of β-(5-tert-butyl-4-hydroxy-3-methylphenyl)propanoic acid with alcohols containing one or more hydroxyl groups, such as for example methanol, diethylene glycol, octadecanol, triethylene glycol, 1,6-hexanediol, pentaerythritol, neopentyl glycol, tris(hydroxyethyl)isocyanurate, thiodiethylene glycol, and the N,N'-bis(hydroxyethyl)diamide of oxalic acid;
- the esters of β-(3,5-dicyclohexyl-4-hydroxyphenyl)propanoic acid with alcohols containing one or more hydroxyl groups, such as for example methanol, diethylene glycol, octadecanol triethylene glycol, 1,6-hexanediol, pentaerythritol, neopentyl glycol, tris(hydroxyethyl)isocyanurate, thiodiethylene glycol, and the N,N'-bis(hydroxyethyl)diamide of oxalic acid;
- amides of the β - (3, 5-di-tert-butyl-4-hydroxyphenyl)propanoic acid, for example N,N'-bis(3,5-di-tert-butyl-4-hydroxyphenylpropionyl)hexamethylenediamine, N,N'-bis(3,5-di-tert-butyl-4- hydroxyphenylpropionyl)trimethylenediamine, N,N'-bis(3,5-di-tert-butyl-4-hydroxyphenylpropionyl)hydrazine.

Examples of complexing agents are:
N,N'diphenyl-diamide of oxalic acid, N-salicylal-N'-salicyloilhydrazide, N,N'-bis(salicyloil)hydrazine, N,N'-bis(3,5-di-tert-butyl-4-hydroxyphenylpropionyl)hydrazine, 3-salicyloilamine-1,2,4-triazol, bis-(benzylidene)dihydrazide of oxalic acid.

Examples of phosphites and phosphonites are: triphenyl phosphite, diphenylalkyl phosphites, phenyldialkyl phosphites, tris(nonylphenyl)phosphite, trilauryl phosphite, distearyl pentaerythritol diphosphite, tris(2,4-di-tert-butylphenyl)phosphite, diisodecyl pentaerythritol diphosphite, bis(2,4-di-tert-butylphenyl)pentaerythritol diphosphite, tristearyl sorbitol triphosphite, tetrakis(2,4-di-tert-butylphenyl)-4,4'-biphenylene diphosphonite, and 3,9-bis(2,4-di-tert-butylphenoxy)-2,4,8,10-tetraoxa-3,9-diphosphaspiro[5,5]undecane.

Examples of scavengers of peroxide are: esters of β-thiodipropionic acid, for example laurylic, stearilic, myristic, or tridecylic ester, mercaptobenzoimidazole, or the zinc salt of 2-mercaptobenzoimidazole, dibutyldithiocarbamate zinc, dioctadecyl disulfide, and pentaerythritol tetrakis(β-dodecylmercapto)propionate.

Examples of compounds used as basic co-stabilizers are: melamine, polyvilylpyrrolidone, dicyandiamide, triallyl cyanurate, urea derivatives, hydrazine derivatives, amine, polyamides, polyurethanes, alkaline and alcaline-earth metal salts of higher fatty acids, for example Ca, Zn, and Mg stearate, Na ricinoleate, K palmitate, and Sb or Zn pyrocatecholate.

Examples of nucleating agents are:
4-tert-butyl-benzoic acid, adipic acid, and diphenylacetic acid.

Examples of reinforcing agents are: calcium carbonate, silicates, glass fibers, amianthus, talc, kaolin, mica, metal oxides and hydroxides, barium sulfate, carbon black and graphite.

The following examples are given in order to illustrate and not limit the present invention:

## EXAMPLE A

### Preparation of epoxidized polypropylene

In a four necks 250 ml flask, equipped with mechanical agitator, cooling device, thermometer, and nitrogen flow tube, are introduced 30 g of polypropylene with a vinylidene terminal group, with a molecular weight of about 500, containing one double bond per chain, and prepared by polymerization in homogeneous phase with di-cyclopentadienyl zirconium dichloride and methylalumoxane, 8.6 ml of an aqueous solution at 35% (weight/vol.) of hydrogen peroxide, 15 ml of a dichloroethane solution containing 1.17 mmoles of $[(C_8H_{17})_3\ N(CH_3)]_3\ PW_4O_{24}$, and 90 ml of dichloroethane.

The mixture is maintained at reflux temperature for 6 hours while under agitation.

At the end, 900 ml of ethyl ether are added. The phases are allowed to separate, and the organic phase is washed with water.

The organic solution is dried with sodium sulfate, and then passed through a column containing "Florisil$^{Tm}$" (magnesium silicate) in order to eliminate the catalyst completely.

After evaporating the solvent, 28.4 g of viscous oil are obtained having an epoxide content of 1.45 mmoles/g.

The NMR analysis of the epoxidized polymers shows a substantially total conversion of the olefin.

EXAMPLE B

Preparation of epoxidized polypropylene

In the same apparatus of Example A are introduced 50.3 g of polypropylene with a vinyl terminal group containing one double bond per polymer chain, prepared by polymerization of the propylene in homogeneous phase with dicyclopentadienyl zirconium dichloride and methylalumoxane, and having a molecular weight of about 640, 26 ml of an $H_2O_2$ solution at 35% (weight/vol), 26 ml of a dichloroethane solution containing 1.7 mmoles of $[(C_8H_{17})_3\ N(CH_3)]_3\ PW_4O_{24}$ and 150 ml of dichloroethane. The operation is carried out as described in Example A. 48 g of a pale yellow oil are obtained having an epoxide content of 1.49 mmoles/g.

The NMR analysis reveals an 82%-85% olefin conversion.

EXAMPLE 1

In the same apparatus as for Example A are introduced 24.5 g of epoxidized polypropylene prepared as described in Example A, starting with polypropylene with a molecular weight of about 500 containing a vinylidene terminal group (containing 1.45 mmole/g of epoxide), and 80 ml of 4-amino-2,2,6,6-tetramethylpiperidine. The reaction mixture is heated to 190°C under a light nitrogen flow, and is kept at this temperature, under agitation, for 18 hours. At the end of the reaction, the excess 4-amino-2,2,6,6-tetramethylpiperidine is recovered by way of distillation under vacuum (67 ml are recovered).

The remainder is brought in solution with 200 ml of ethyl ether.

The organic solution is washed with water until the wash water is neutral, then it is dried on sodium sulfate, and finally the solvent is removed by evaporation. 26.8 g of a pale yellow oil are obtained.

The gas-chromatographic analysis shows the complete absence of free 4-amino-2,2,6,6-tetramethylpiperidine. The elementary analysis indicates that the percentage of nitrogen by weight is 3.24%; the theoretic content (based on the epoxide content) is 3.33%.

The presence of the desired product is also confirmed by NMR analysis.

The synthesized compound has the formula:

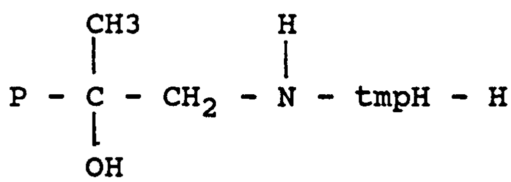

where P, in this case, indicates the polypropylene chain having a molecular weight of about 500. This structure can be referred to the general formula $P(ZA')_n$, where ZA' has the structure of (b), where: $R_1$ is $CH_3$, t is O, Q is H, $R_7$ is H, and A' has the structure of (i), where $R_2$ and $R_3$ are H, n is 1, and in tmpH $R_8$ is H.

EXAMPLE 2

In the same apparatus of example A are introduced 17.8 g of epoxidized polypropylene obtained, as described in Example A, from polypropylene with a vinylidene terminal group, having a molecular weight of about 900, containing 0.929 mmoles/g of epoxide groups, and 50 ml of 4-amino-2,2,6,6-tetramethylpiperidine. Operating following the same method as in Example 1, 43 ml of nonreacted 4-amino-2,2,6,6-tetramethylpiperidine are obtained. The organic phase is treated as in Example 1, and 19.7 g of yellow oil are obtained with a nitrogen content (weight percentage) of 2.45% (theoretical 2.27%).

The presence of the desired product is also confirmed with NMR analysis.

The synthetic compound has the formula:

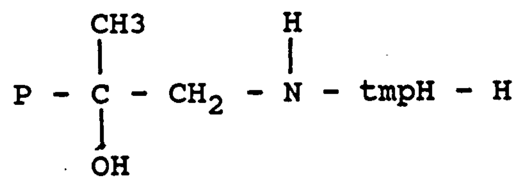

where P indicated the polypropylene chain having a molecular weight of about 900. This structure can be referred to the general formula $P(ZA')_n$, where ZA' has the structure of (b), where: $R_1$ is $CH_3$, t is O, Q is H, $R_7$ is H, n is 1, and in tmpH $R_8$ is H.

EXAMPLE 3

In the same apparatus of Example A are introduced 30.1 g of epoxidized polypropylene obtained, as described in Example A, from polypropylene with a vinylidene terminal group, having a molecular weight of about 400, containing 2.26 mmoles/g of epoxide, 13.7 g if N,N'-bis-tetramethylpiperidyl-1,6-hexamethylenediamine and 4,8 g of phenol as the catalyst.

The reaction mixture is heated to 190°C and maintained at this temperature under nitrogen flow, while agitating, for 30 hours.

After cooling, the mixture is diluted with 200 ml of ethyl ether.

The ether solution is washed with a 0.5 M of NaOH aqueous solution, and then with $H_2O$ until the wash waters are neutral.

After the ether mixture is anhydrated, the solvent is flashed. The product obtained is an oil dissolved in methylene chloride, and the solution is passed through a column containing Florisil$^{Tm}$". 36.3 g of the desired product are obtained, having a nitrogen content (weight percentage) of 4.16% (theoretical 4.38%).

The structure is confirmed by the NMR analysis.

The synthetic compound has the structure:

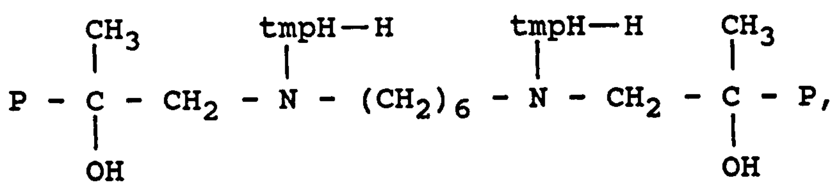

where P, in this case, indicates the polypropylene chain having a molecular weight of 400. This structure can be referred to formula (II), where m is 1 and the group

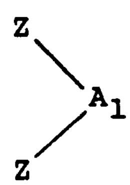

is the structure of (b') with t=O, Q=H, $R_1$=$CH_3$, and $A_1$ is the structure of (XI) with h=6, $R_2$=H and in tmpH $R_8$ is H.

EXAMPLE 4

In the same apparatus of Example A are introduced 30 g of epoxidized polypropylene obtained as described in Example A, from polypropylene with a molecular weight of about 300, having an epoxide content of 3 mmoles/g, 20.1 g of 4-butylamine-2,2,6,6-tetramethylpiperidine, and 12.8 g of phenol. Operating as described in Example 3, one

obtains 39.2 g of the desired product having a nitrogen content (weight percentage) of 4.9% (theoretical 5.14), containing no free 4-butylamino-2,2,6,6-tetramethylpiperidine, as confirmed by the gas-chromatographic analysis.

The structure is confirmed by NMR analysis.

The synthetic compound has the formula:

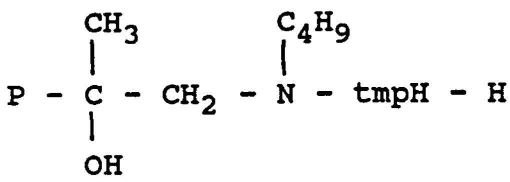

where P indicates the polypropylene chain having a molecular weight of about 300. This structure can be referred to the general formula $P(ZA')_n$, where ZA' has the structure of (b), where: $R_1$ is $CH_3$, t is O, Q is H, $R_7$ is H, n is 1, and A' has the structure of (i), where $R_2$ is H, $R_3$ is $C_4H_9$, n is 1, and in tmpH $R_8$ is H.

EXAMPLE 5

In the same apparatus described in Example A are introduced 34.2 g of epoxidized polypropylene obtained as described in Example B, from polypropylene with a vinyl terminal group, molecular weight of about 640, containing 1.49 mmoles of epoxide/g, 115 ml of 4-amino-2,2,6,6-tetramethylpiperidine.

The operation is the same as described in Example 1.

40g of a viscous pale yellow oil are obtained, containing no free 4-amino-2,2,6,6-tetramethylpiperidine (as confirmed by gas-chromatographic analysis), and having a percentage content of nitrogen of 3.2% (theoretical 3.38%).

The compound obtained has the following formula:

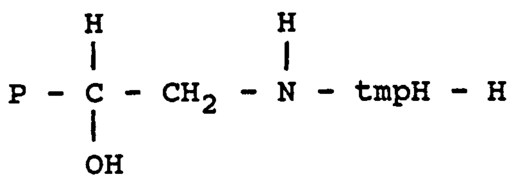

where P, in this case, indicates the polypropylene chain having a molecular weight of about 640. This structure can be referred to the general formula $P(ZA')_n$, where ZA' has the structure of (b), where: $R_1$ is H, t is O, Q is H, $R_7$ is H, and A' has the structure of (i), where $R_2$ and $R_3$ are H, n is 1, and in tmpH $R_8$ is H.

EXAMPLE 6

In the same apparatus of Example A are introduced 15 g of 2,2,6,6-tetramethylpiperidine-4-ol, 100 ml of anhydrous xylene, 2.2 g of metallic sodium and the mixture is heated at reflux until metallic sodium disappears completely. Then one adds, in 30 minutes, 16.7 g of epoxidized polypropylene obtained as described in Example A, from polypropylene with a vinylidene terminal group having a molecular weight of about 300, and an epoxide content of 2,85 mmoles/g dissolved in 20 ml of xylene. The mixture is refluxed for 20 hours. 2 ml of water are added to the xylene solution. The xylene is flashed; the remainder is dissolved in hexane, washed with water, the organic phase is separated, and the solvent flashed. The yellowish oil obtained is dissolved again in methyl chloride and passed through a column containing "Florisil[Tm]". After evaporating the solvent one obtains 12 g of a yellowish oil which does not contain 2,2,6,6-tetramethylpiperidine-4-ol, as confirmed by gas-chromatographic analysis, and has a nitrogen content (weight percentage) of 2.2% (theoretical 2.76%). The structure of the product has been confirmed by NMR analysis.

The compound obtained has the formula:

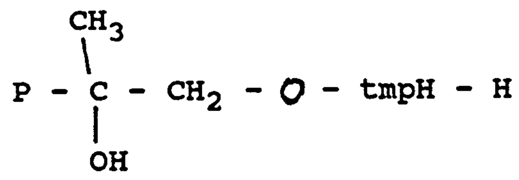

where P, in this case, indicates the polypropylene chain having a molecular weight of about 300. This structure can be referred to the general formula $P(ZA')_n$, where ZA' has the structure of (b), where: $R_1$ is $CH_3$, t is O, Q is H, $R_7$ is H, and A' has the structure of (ii), where $R_2$ is H, n is 1, and in tmpH $R_8$ is H.

EXAMPLE 7

In the same apparatus described in Example A are introduced 42.3 g (42.3 mmoles) of polybutadiene with a phenolic terminal group with a PM of 1000 containing 60% unsaturations (marketed by EGA-CHEMIE), 41.5 ml of hydrogen peroxide at 35% (weight/vol), and 42 ml of a dichloroethane solution containing 4.2 mmoles of $[(C_8H_{17})_3NCH_3)]_3PW_4O_{24}$, and 300 ml of dichloroethane.

The mixture is heated at reflux for 6 hours while under mechanical agitation.

Finally, 200 ml of $H_2O$ are added; the organic phase is separated, washed with $H_2O$ and dried on Ca chloride.

After the dichloroethane is evaporated, the viscous oil is isolated, then washed twice with methanol (with 300 ml portions) at 40°C. The methanol is separated by settling. After drying under vacuum, 35.2 g of a vitreous solid are obtained. This solid has an epoxide content of 5.4 mmoles/gr.

The NMR analysis indicates that about 50% of the double bonds present on the polybutadiene have been epoxidized.

30.5 g (165 mmoles of epoxide) of epoxidized polybutadiene prepared as described above, are added together with 116 g of 4-amino-2,2,6,6-tetramethylpiperidine. The mixture is brought to 190°C and maintained at said temperature for 20 hours under light nitrogen flow.

At the end, the nonreacted 4-amino-2,2,6,6-tetramethylpiperidine (80 g) is recovered by way of distillation.

250 ml of $H_2O$ are added to the residual mixture which is then heated to 90°C.

The solid which forms is filtered and washed again with boiling $H_2O$. A vitreous solid is separated by way of filtration, then it is pulverized and dried under vacuum.

49.5 g of a powder with an 8.18% nitrogen content are obtained.

The formation of the addition product of the 4-amino-2,2,6,6-tetramethylpiperidine with the epoxide groups is confirmed by the NMR analysis, while the chromatographic analysis shows the absence of free 4-amino-2,2,6,6-tetramethylpiperidine.

The synthetic product comprises a polybutadiene chain with a molecular weight is about 1000, and bonded to said chain are about 5 groups selected from the two following formulas:

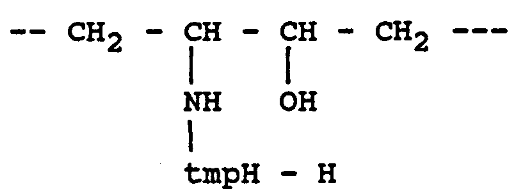

which can be referred to the structure of (b), where: $R_1$ is H, Q is $(CH_2)_t$, t is 1, $R_7$ is H, and A' has the structure (i), with $R_2$ and $R_3$ are H; and

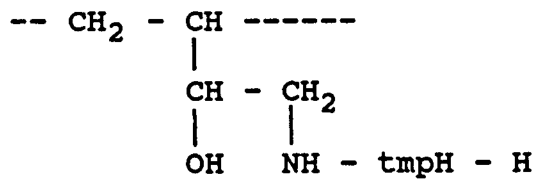

which can be referred to the structure of (a), where $R_7$ is H, and A' has the structure of (i) with $R_2$ and $R_3$ are H, and in tmpH $R_8$ is H.

EXAMPLE 8

In the same apparatus of Example A are introduced 13/3 g of epoxidized polypropylene obtained as described in Example A, starting with polypropylene with a molecular weight of about 800 and containing 1.24 mmoles of epoxide/g, 7.8 g of 2-hydrazino-4,6-bis[2',2',6',6'-tetramethylpiperidinyl-4'-amino]-1,3,5-triazine, 2 g of lithium perchlorate and 60 g of diglyme. The mixture is heated to reflux temperature (165°C) under agitation and light nitrogen flow for 25 hours. Finally the solvent is distilled under vacuum, the residue is dissolved again in ethyl ether, the ether solution is washed 3 times with water, then dried on anhydrous sodium sulfate and the solvent is evaporated. The residue is dried under vacuum until it reaches constant weight. 17.2 g of a low-melting vitreous solid is obtained, without the initial triazine (as confirmed by gas-chromatographic analysis) and with a 9.8% nitrogen content (theoretical 10.26%).

The structure is confirmed by NMR analysis.

The synthetic compound has the following structural formula:

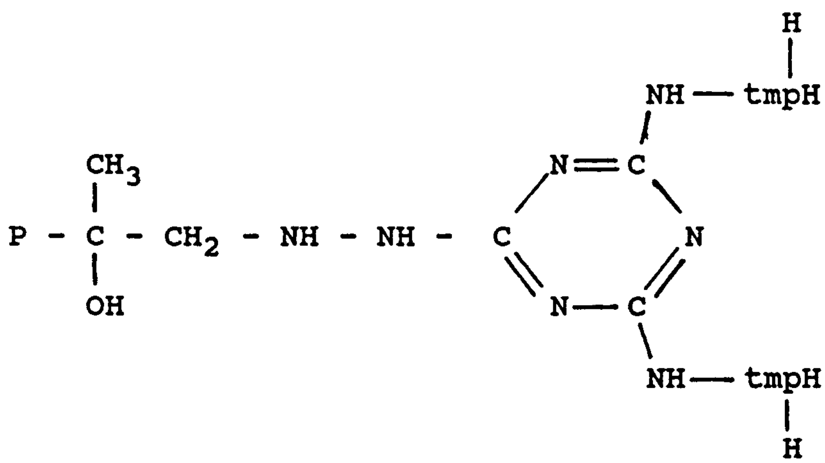

where P in this case represents the polypropylene chain having a molecular weight of about 800. This structure can be referred to the general formula $P(ZA')_n$, where ZA' has the structure of (b), where: $R_1$ is $CH_3$, t is O, Q is H, $R_7$ is H, and A' has the structure of (xi), where G'''=$B_1$=(i) with $R_2$ and $R_3$ being equal to H, in tmpH $R_8$ is H, and G'' is NH-NH.

EXAMPLE 9

The following procedure is followed in order to evaluate the performances.

In a high-speed Hansel mixer at 1000 rpm are introduced 3 Kg of polypropylene marketed by HIMONT under the trademark SP-179, and 100 ppm of OB/55-AT paraffin oil marketed by ROL OIL; "Gray 1006" pigment is added at a concentration of 0.5% by weight, and then one of the compounds of the present invention in the quantity specified below.

After mixing for 5 minutes, the stabilizer and pigment are perfectly distributed on the polymer surface, and said polymer is then discharged and fed into a BANDERA single-screw extruder (30 mm in diameter). The polymer mixture is then extruded at 230°C.

Using a NEGRI and BOSSI injection press the pellets are injection molded in order to obtain 2.5 mm thick samples with an embossed surface and measuring 65 mm x 40 mm.

The samples are put in the vertical cylindrical sample-holder of a XENOTEST 1200 marketed by Hanan (MOD M404) with the embossed surface facing the lamp.

The accelerated aging tests are carried out according to ISO 4892 regulations, which foresee the following operating conditions:

three 4500 W xenon lamps
Standard filters (quartz, >280 nm)

| | |
|---|---|
| RADIANCE FROM | 280-400 nm 138 W/m$^2$ |
| | 300-830 nm 1016 W/m$^2$ |
| BLACK PANEL temp. | 64°C |
| CHAMBER temp. | 40°C |
| Relative humidity | 63% (dry cycle) |
| DRY CYCLE/RAIN | 102/18 min. |

The results are evaluated by taking the samples from the XENOTEST after specific exposure times, and measuring the variations of gray using a HUNTER D25 P-9 colorimeter to compare said samples to one which has not been exposed.

For this evaluation, one uses the "L" value which goes from white (L=100) to black (L=0). The greater the whitening of the sample, the worst the performance of the stabilizer.

The performances of the stabilizers of the present invention have been compared to those of two commercial HALS, i.e., TINUVIN 770 (3500 ppm) and CHIMASSORB 944 (4500 ppm).

The stabilizers object of the present invention are added to the polymer in such a way as to have the same molar equivalents of 3500 ppm of TINUVIN 770.

The data obtained are summarized in Table 1, where one finds the values of L relative to exposure times of 0, 500 and 1000 hours (indicated respectively with $L_0$, $L_{500}$, and $L_{1000}$), and the type of compound used as stabilizer.

From the data shown in Table 1, it can be deduced that the compounds objects of the present invention act as light stabilizers for the material in which they are dispersed, and that their performances can be compared to, or are even better than, the ones obtained with well known stabilizers presently being marketed.

TABLE 1

| Stabilizer | $L_0$ | $L_{500}$ | $L_{1000}$ |
|---|---|---|---|
| ---- | 30.7 | --- | 46 |
| TINUVIN 770 | 31.5 | 31.7 | 32.5 |
| CHIMASSORB 944 | 30.0 | --- | 38.0 |
| Compound example 4 | 31.1 | 31.5 | 32.3 |
| Compound example 2 | 31.0 | 31.5 | 33.3 |
| Compound example 5 | 31.1 | 31.2 | 32.8 |

**Claims**

1. Polymer compounds containing sterically hindered amino groups, suitable for use as stabilizers and having the general formula:

$$P(ZA')_n \qquad (I) \text{ or}$$

$$Py(Z_2A_1)_m \qquad (II)$$

where:

- P is a polymer chain deriving from a polymer selected from: polymers or copolymers of olefins having a terminal double bond and from 2 to 10 carbon atoms, or polymers of conjugated di-olefins having 4 or 5 carbon atoms, or their copolymers with the olefins defined above;

- n is a number from 1 to 20;
- m is an integer from 1 to 3;
- y is an integer which, for each value of m, has values from 2 to 2+(m-1);
- the ZA' groups, equal or different, directly bonded to the polymer chain, are present in the terminal position, inserted in the polymer chain or in one of its branches, and are selected from the group comprising the following formulas:

a)

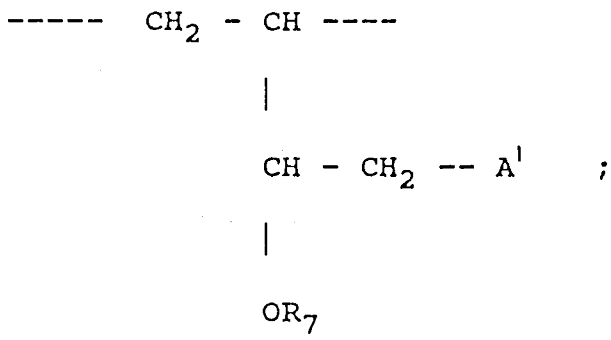

b)

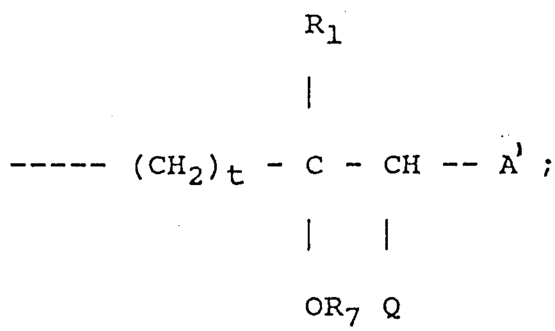

where:

| | |
|---|---|
| $R_1$ | is H, a $C_1$-$C_8$ alkyl radical or phenyl; |
| t | is O or 1; |
| Q | is H or $-(CH_2)t$ - according as ZA' is terminal or internal; |
| $R_7$ | is H, or a $C_1$-$C_3$ alkyl radical, a benzyl or allyl radical, a $(CO)R_8$ radical, where $R_8$ is a $C_1$-$C_6$ alkyl, $C_2$-$C_6$ alkenyl, $C_2$-$C_6$ alkinyl, $C_6$-$C_{10}$ aryl, $C_7$-$C_{13}$ aralkyl radical, or a $Si(R'_8)_3$ radical, where $R'_8$ is a $C_1$-$C_4$ alkyl or a phenyl radical; and |
| A' | is selected from the following structures: |

i)

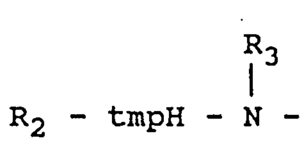

where:

$R_2$ is H, a $CH_2$-CN radical, a $C_1$-$C_{12}$ alkyl, $C_3$-$C_{12}$ alkenyl radical, an acyl radical of the formula CO-$R_2$', where $R_2$' is a $C_1$-$C_{12}$ alkyl radical, or a $C_7$-$C_{12}$ aralkyl radical optionally substituted with alkyl or alkoxy groups;

$R_3$ is H, a $C_1$-$C_{18}$ alkyl, $C_5$-$C_8$ cycloalkyl, $C_2$-$C_{12}$ alkoxyalkyl radical, alkyl dialkylamine having up to 10 carbon atoms, or the tmpH-$R_2$ group; tmpH represents the

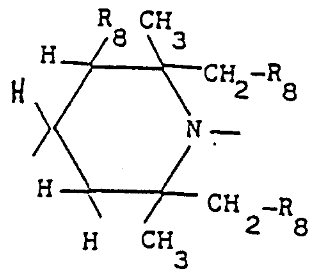

group, where $R_2$ is always bonded to the piperidine nitrogen atom and $R_8$ is H or $CH_3$;

ii) $R_2$-tmpH-O-;

iii)

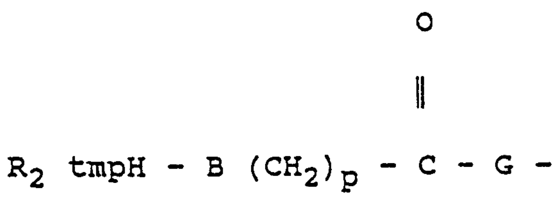

where B is O or $NR_3$; p is an integer from 1 to 4; G is O, S, NH or NH-NH;

iv)

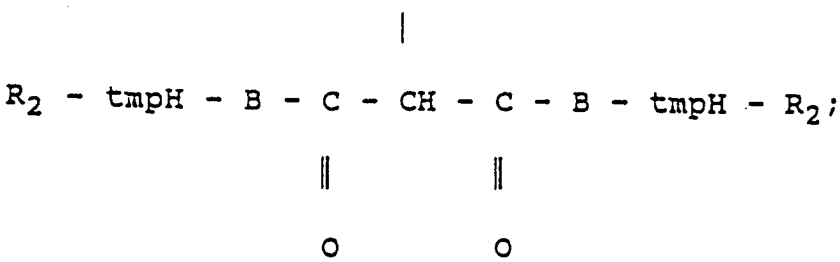

v)

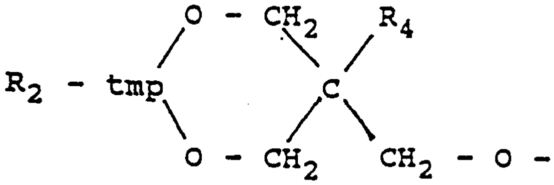

where $R_4$ is a $C_1$-$C_6$ alkyl radical, and tmp represents the

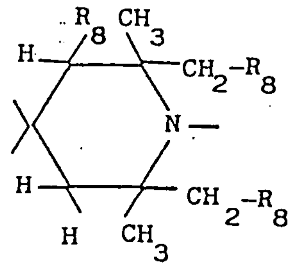

group, where $R_2$ is always bonded to the piperidine nitrogen atom;

vi)

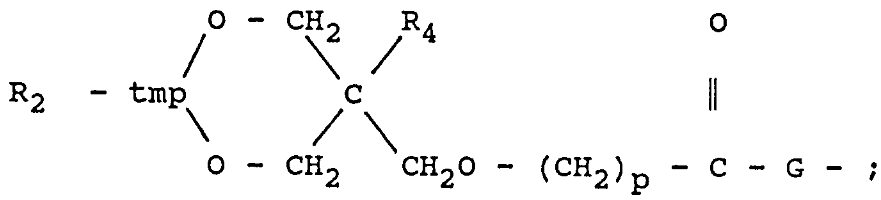

vii)

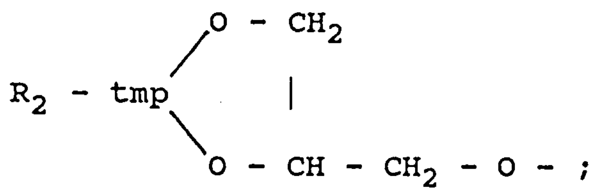

viii)

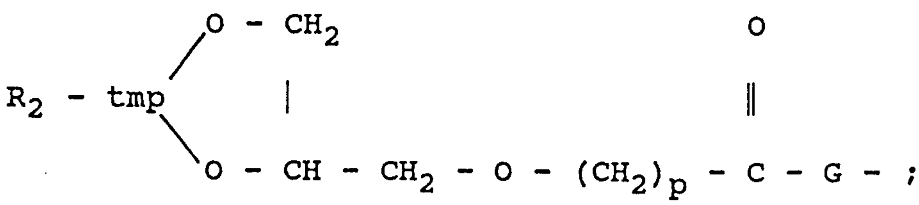

ix)

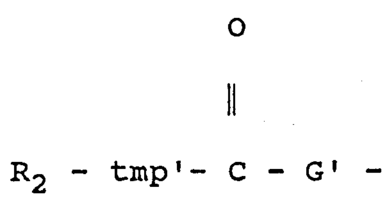

where G' is O, NH or NH-NH, and the tmp has the

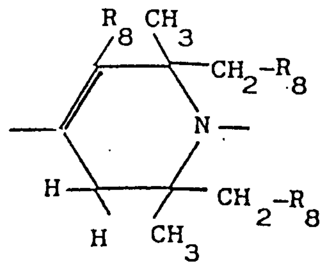

structure, where $R_2$ is always bonded to the piperidine nitrogen atom;

x)

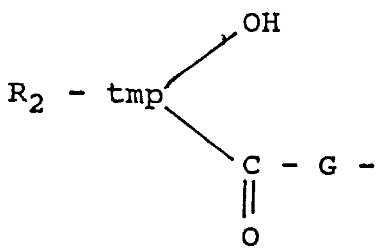

xi) a triazine type structure of the formula

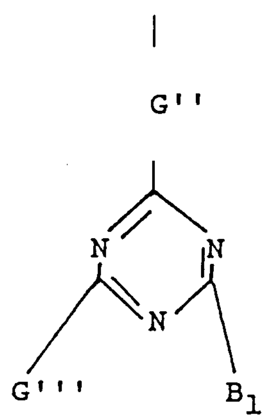

where G'' is NH or NH-NH; G''' is selected from (i), (ii), (v), and (vii); and $B_1$ has the same meaning of G''', or is a D-$R_5$ group, where D is O, S, NH, $NR_7$, and where $R_5$ is a $C_1$-$C_{20}$ alkyl, $C_5$-$C_8$ cycloalkyl, $C_7$-$C_{12}$ aralkyl, or $C_6$-$C_{12}$ aryl radical ; and

- the

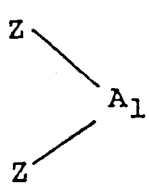

groups, equal or different, are selected from the following formulas:

a')

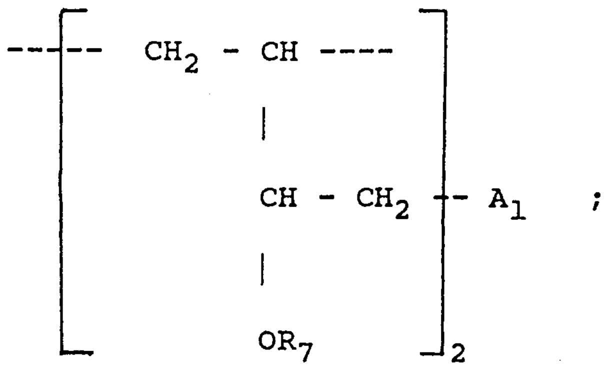

b')

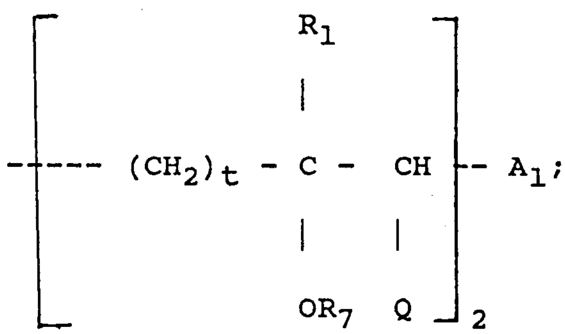

c')

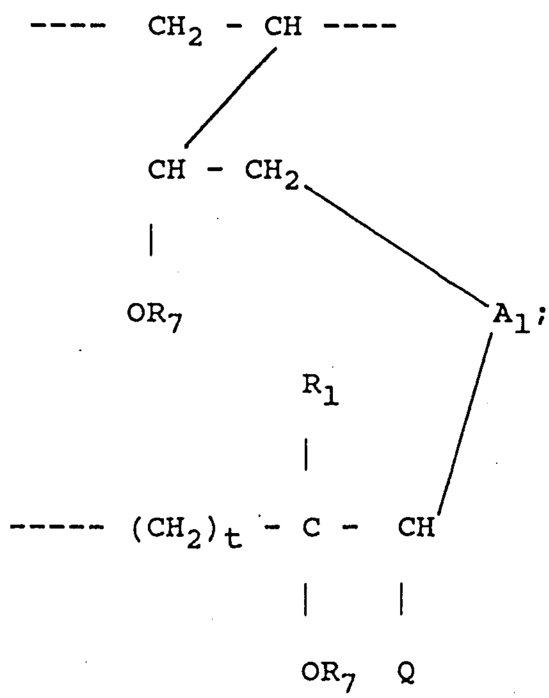

where the $A_1$ group is selected from the following structures:

xii)

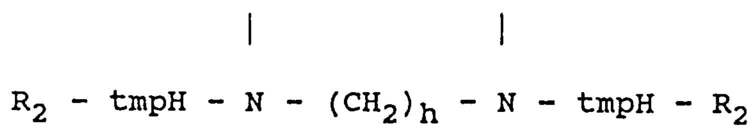

where h is an integer from 2 to 8;

xiii)

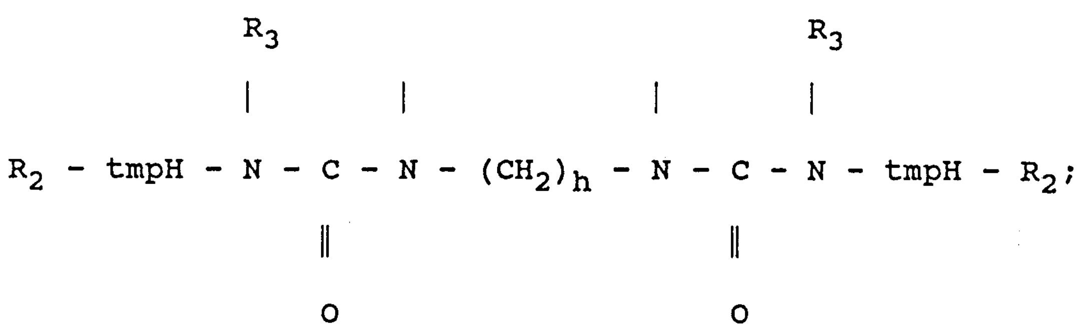

xiv)

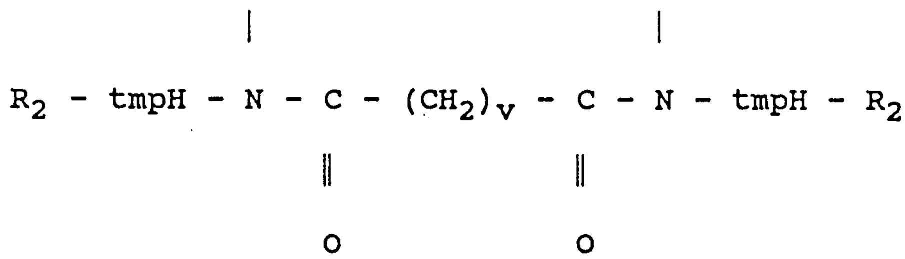

where v is an integer from 0 to 8;

xv)

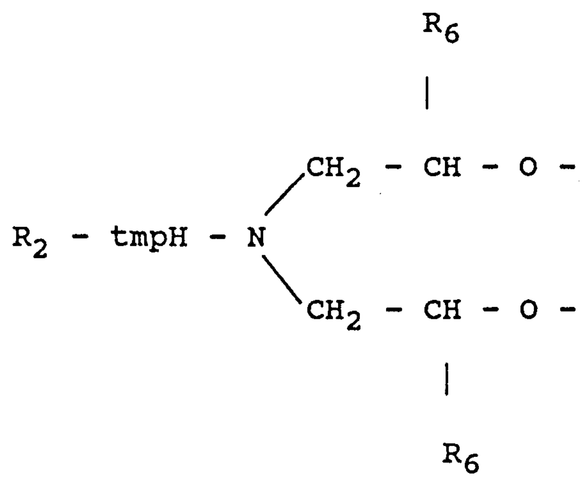

where $R_6$ is H or $CH_3$;

xvi)

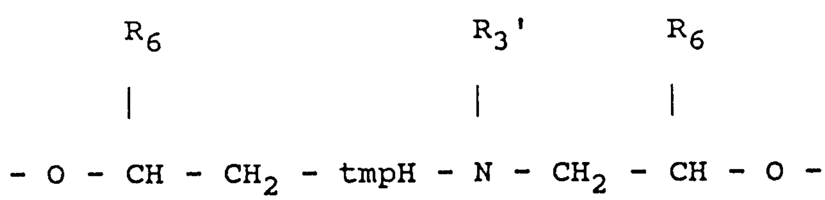

where the piperidine nitrogen of the tmpH group is bonded to the carbon atom of the $CH_2$ group, and $R_3$' has the same meaning of $R_3$, if the latter is different from H and the $R_2$-tmpH group;

xvii)

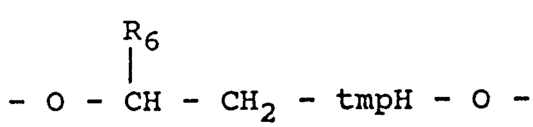

where the piperidine nitrogen of the tmpH group is bonded to the carbon atom of the $CH_2$ group;

xviii)

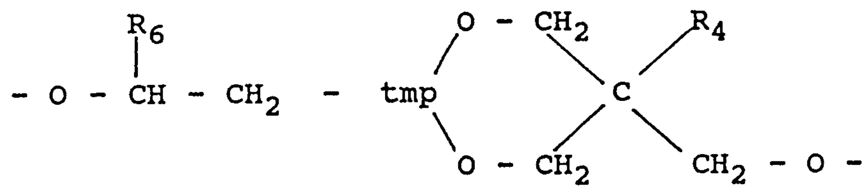

(xix)

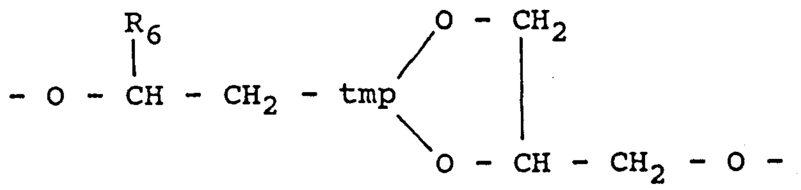

2. Compounds of claim 1, where the polymer chain (P) derives from polyethylene, polypropylene, polybutene, polybutadiene or their copolymers, and has a molecular weight from 200 to 10,000.

3. Compounds of claim 1, where the polyalkyl piperidine is 2,2,6,6-tetramethylpiperidine.

4. Polymer compositions comprising the stabilizers of claim 1.

5. Polymer compositions of claim 4, comprising from 0.01 to 3 parts by weight of the stabilizers per 100 parts by weight of the polymer material to be stabilized.

6. Polymer compositions of claim 4, where the polymer material to be stabilized comprises one or more polymers or copolymers, or their mixtures, obtained by sequential polymerization of olefins of the formula R'''-CH=$CH_2$, where R''' is a hydrogen atom, a 1-6 carbon alkyl or an aryl radical.

**Patentansprüche**

1. Sterisch gehinderte Aminogruppen enthaltende, polymere Verbindungen,für die Verwendung als Stabilisatoren geeignet,mit der allgemeinen Formel

$$P(ZA')_n \qquad \text{(I) oder}$$

$$P_y(Z_2A_1)_m \qquad \text{(II)}$$

worin

- P für eine Polymerenkette steht, die sich ableitet von einem Polymeren, ausgewählt unter: Polieren oder Copolymeren von Olefinen mit einer endständigen Doppelbindung und mit 2 bis 10 Kohlenstoffatomen oder Polymeren von konjugierten Diolefinen mit 4 oder 5 Kohlenstoffatomen oder deren Copolymeren mit den vorstehend definierten Olefinen;
- n für eine Zahl von 1 bis 20 steht;
- m für eine ganze Zahl von 1 bis 3 steht;
- y für eine ganze Zahl steht, die für jeden Wert von m Werte von 2 bis 2+(m-1) besitzt;
- die ZA'-Gruppen, gleich oder verschieden und an die Polymerenkette direkt gebunden, in der Endposition, eingereiht in die Polymerenkette oder in eine ihrer Verzweigungen, vorliegen und ausgewählt sind aus der die folgenden Formeln umfassenden Gruppe:

a)

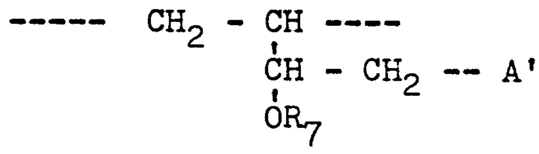

b)

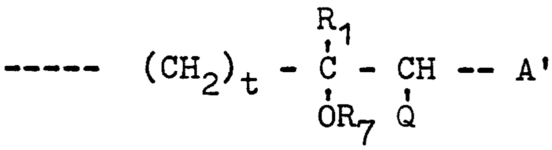

worin:

$R_1$ für H, einen $C_{1-8}$-Alkylrest oder Phenyl steht; t für O oder 1 steht;

Q für H oder $-(CH_2)_t-$, jenachdem, ob ZA' endständig oder binnenständig ist, steht;

$R_7$ die Bedeutung hat von H oder einem $C_{1-3}$-Alkylrest, einem Benzyl- oder Allylrest, einem Rest $(CO)R_8$, worin $R_8$ die Bedeutung hat von $C_{1-6}$-Alkyl, $C_{2-6}$-Alkenyl, $C_{2-6}$-Alkinyl, $C_{6-10}$-Aryl, einem $C_{7-13}$-Aralkylrest, oder einem Rest $Si(R'_8)_3$, worin $R'_8$ für einen $C_{1-4}$-Alkyl- oder einen Phenylrest steht; und

A' ausgewählt ist unter den folgenden Strukturen

i)

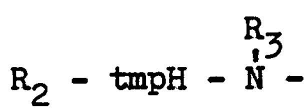

worin

$R_2$ die Bedeutung hat von H, einem $CH_2$-CN-Rest, einem $C_{1-12}$-Alkyl-, $C_{3-12}$-Alkenylrest, einem Acylrest der Formel $CO-R_{2'}$, worin $R_{2'}$ die bedeutung von einem $C_{1-12}$-Alkylrest, oder einem $C_{7-12}$-Aralkylrest, gegebenenfalls substituiert mit Alkyl- oder Alkoxygruppen;

$R_3$ für H, einen $C_{1-18}$-Alkyl-, $C_{5-8}$-Cycloalkyl-, $C_{2-12}$-Alkoxyalkylrest, Alkyldialkylamin mit bis zu 10 Kohlenstoffatomen oder die Gruppe tmpH-$R_2$ steht;

tmpH die Gruppe

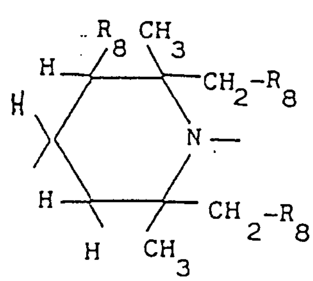

wiedergibt, worin $R_2$ stets an das Piperidinstickstoffatom gebunden ist und $R_8$ für H oder $CH_3$ steht;

ii) $R_2$ - tmpH - O -;

iii)

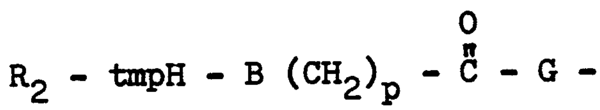

worin B für O oder $NR_3$ steht; p eine ganze Zahl von 1 bis 4 ist; G für O, S, NH oder NH-NH steht;

iv)

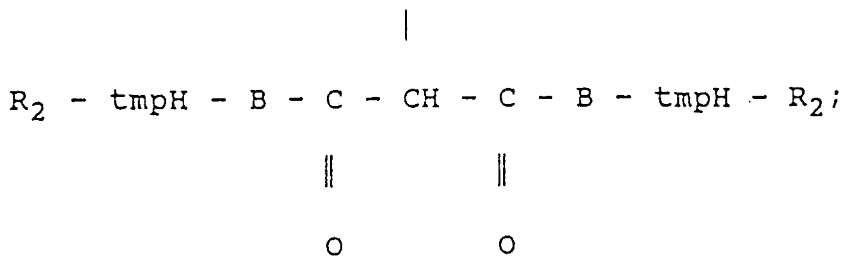

v)

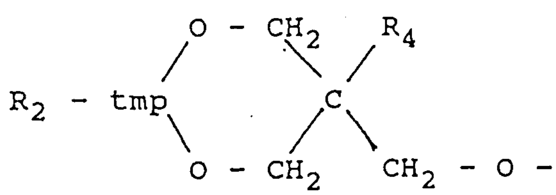

worin $R_4$ für einen $C_{1-6}$-Alkylrest steht und tmp die Gruppe

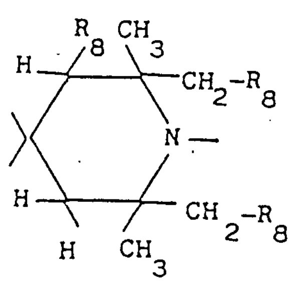

wiedergibt, worin $R_2$ stets an das Piperidinstickstoffatom gebunden ist;

vi)

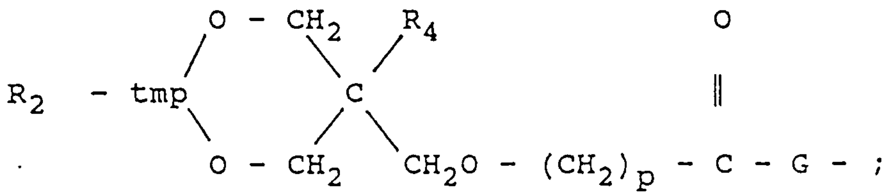

vii)

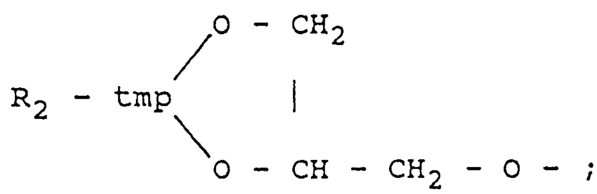

viii)

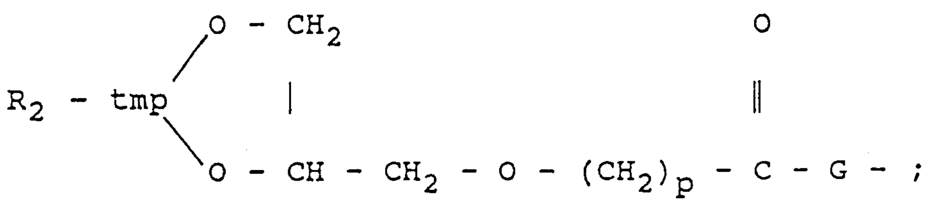

ix)

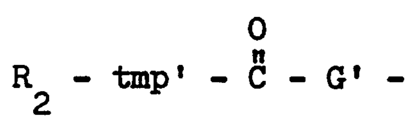

worin G' für O, NH oder NH-NH steht und tmp' die Struktur

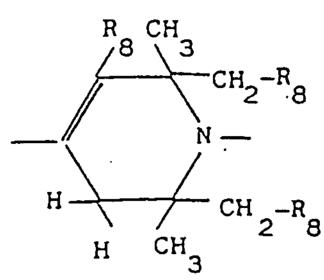

besitzt, worin $R_2$ stets an das Piperidinstickstoffatom gebunden ist;

x)

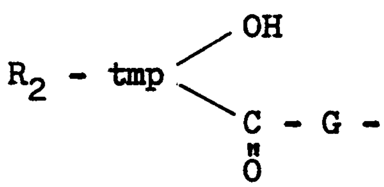

xi) eine Struktur vom Triazin-Typ der Formel

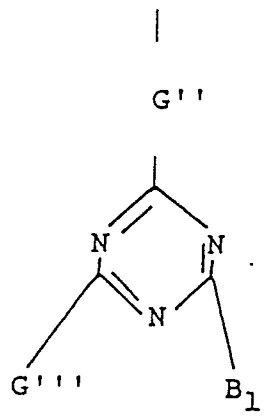

worin G'' für NH oder NH-NH steht; G''' ausgewählt ist unter (i), (ii), (v) und (vii); und $B_1$ die gleiche Bedeutung wie G''' besitzt oder eine Gruppe D-$R_5$ darstellt, worin D für O, S, NH, $NR_7$ steht und worin $R_5$ einen $C_{1-20}$-Alkyl-, $C_{5-8}$-Cycloalkyl-, $C_{7-12}$-Aralkyl- oder $C_{6-12}$-Arylrest bedeutet; und

- die Gruppen

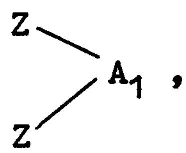

gleich oder verschieden, ausgewählt sind unter den folgenden Formeln:

a')

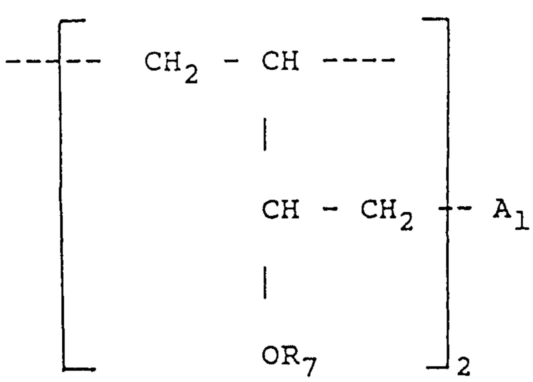 ;

b')

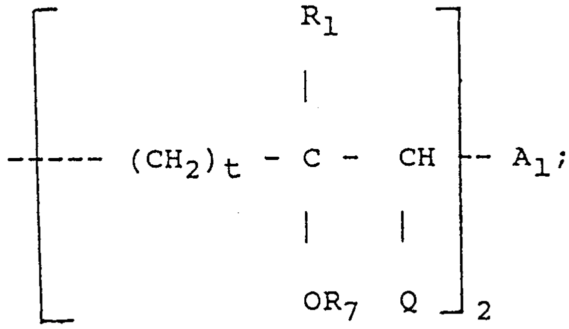

c')

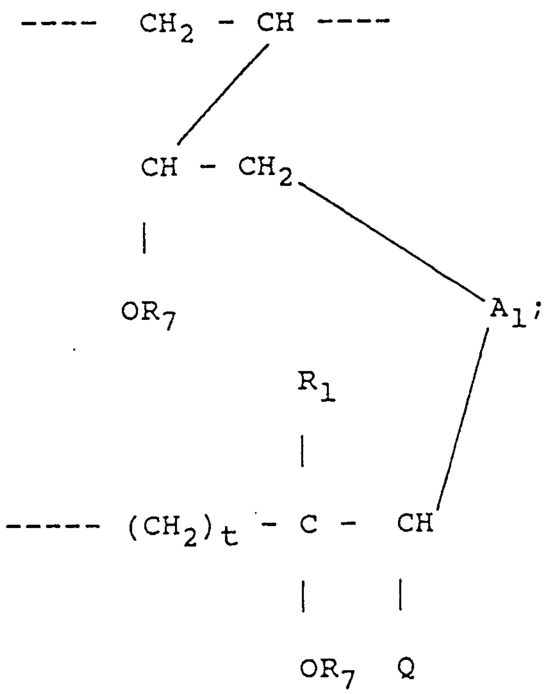

worin die Gruppe $A_1$ unter den folgende Strukturen ausgewählt ist:

xii)

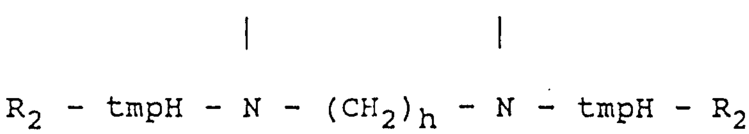

worin h für eine ganze Zahl von 2 bis 8 steht;

xiii)

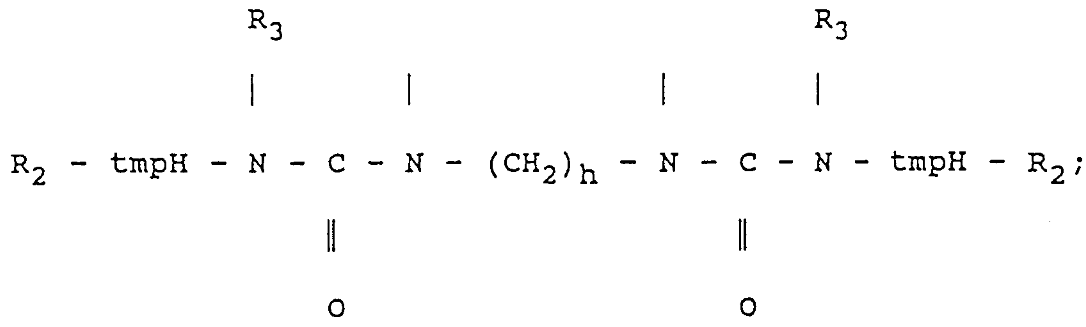

xiv)

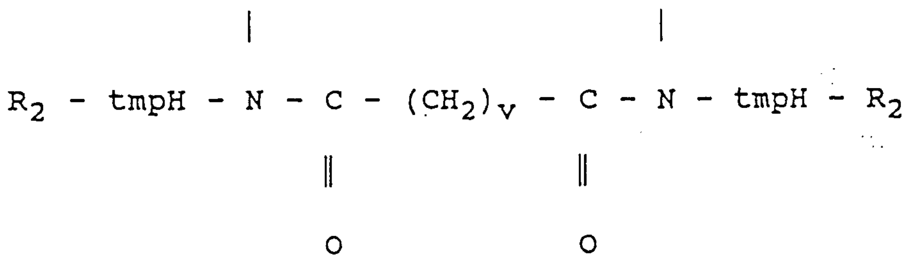

worin v für eine ganze Zahl von 0 bis 8 steht;

xv)

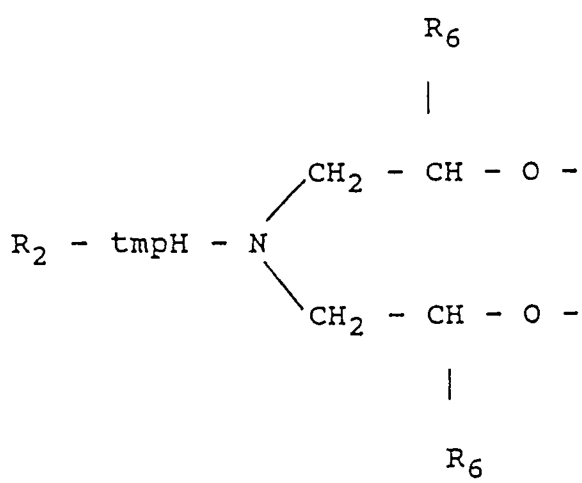

worin $R_6$ für H oder $CH_3$ steht;

xvi)

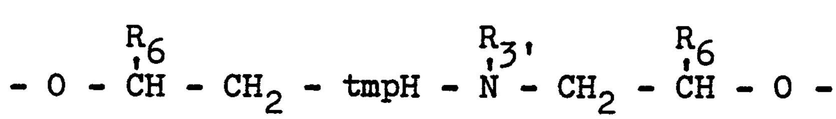

worin der Piperidinstickstoff der Gruppe tmpH an das Kohlenstoffatom der $CH_2$-Gruppe gebunden ist und $R_{3'}$

die gleiche Bedeutung wie $R_3$ besitzt, wenn letzteres von H und der Gruppe $R_2$-tmpH verschieden ist;

xvii)

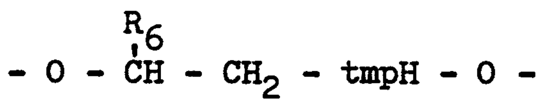

worin der Piperidinstickstoff der Gruppe tmpH an das Kohlenstoffatom der $CH_2$-Gruppe gebunden ist;

xviii)

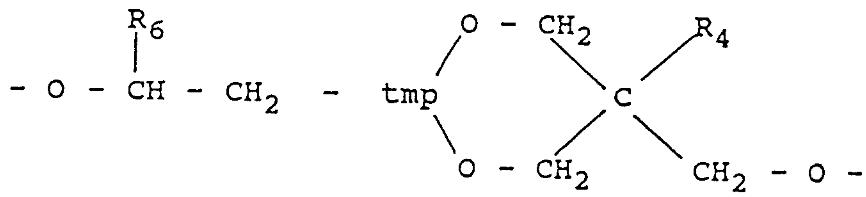

(xix)

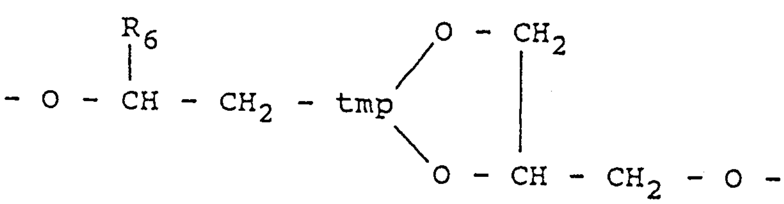

2. Verbindungen gemäß Anspruch 1, worin die Polymerenkette (P) sich von Polyethylen, Polypropylen, Polybuten, Polgbutadien oder deren Copolymeren ableitet und ein Molekulargewicht von 200 bis 10 000 aufweist.

3. Verbindungen gemäß Anspruch 1, worin das Polyalkylpiperidin 2,2,6,6-Tetramethylpiperidin ist.

4. Polymerzusammensetzungen, enthaltend die Stabilisatoren gemäß Anspruch 1.

5. Polymerzusammensetzungen gemäß Anspruch 4, enthaltend 0,01 bis 3 Gew.Teile der Stabilisatoren je 100 Gew.Teile des zu stabilisierenden Polymermaterials.

6. Polymerzusammensetzungen gemäß Anspruch 4, worin das zu stabilisierende Polymermaterial ein oder mehrere Polymere oder Copolymere oder deren Mischungen umfaßt, erhalten durch sequentielle Polymerisation von Olefinen der Formel R'''-$CH=CH_2$, worin R''' für ein Wasserstoffatom, einen $C_{1-6}$-Alkyl- oder einen Arylrest steht.

## Revendications

1. Polymères contenant des groupes amino encombrés stériquement, convenant à l'utilisation comme stabilisants et répondant à la formule générale :

$$P(ZA')_n \quad \text{(I) ou}$$

$$Py(Z_2A_1)_m \quad \text{(II)}$$

dans laquelle:

P est une chaîne polymère dérivée d'un polymère choisi parmi des polymères ou copolymères d'oléfines renfermant une double liaison terminale et de 2 à 10 atomes de carbone, ou des polymères de dioléfines conjuguées renfermant 4 ou 5 atomes de carbone, ou leur copolymères avec les oléfines définies ci-dessus;

n est un nombre de 1 à 20;

m est un entier de 1 à 3;

y est un entier qui, pour chaque valeur de m, prend une valeur de 2 à 2+(m-1);

\- les groupes ZA', identiques ou différents, directement liés à la chaîne polymère, sont présents en position terminale, insérés dans la chaîne polymère ou dans l'une de ses ramifications, et sont choisis dans le groupe comprenant les formules suivantes :

a)

$$\begin{array}{ll} \text{----}CH_2\ \text{-} & CH\ \text{---} \\ & | \\ & CH - CH_2\ \text{--}\ A'\ ; \\ & | \\ & OR_7 \end{array}$$

b)

$$\begin{array}{lccc} & R_1 & & \\ & | & & \\ \text{---}(CH_2)_t\text{-} & C & - & CH\ \text{--}\ A' \\ & | & & | \\ & OR_7 & & Q \end{array}$$

dans lesquelles :

$R_1$ représente H, un radical alkyle en $C_1$ à $C_8$, ou un radical phényle ;

t est 0 ou 1 ;

Q est H ou $-(CH_2)_t-$ suivant que ZA' est en position terminale ou interne ;

$R_7$ est H, ou un radical alkyle en $C_1$ à $C_3$, un radical benzyle ou allyle, un radical $(CO)R_8$, $R_8$ étant un alkyle en $C_1$ à $C_6$, alkinyle en $C_2$ à $C_6$, aryle à $C_6$ à $C_{10}$, aralkyle en $C_{10}$ à $C_{13}$, ou un radical $Si(R'_8)_3$, $R'_8$ étant un radical alkyle en $C_1$ à $C_4$ ou un radical phényle ; et

A' étant choisi parmi les structures suivantes :

i)

$$\begin{array}{lc} & R_3 \\ & | \\ R_2\text{-tmpH - } & N\ \text{-} \end{array}$$

dans laquelle :

$R_2$ est H, un radical $CH_2$-CN, alkyle en $C_1$ à $C_{12}$, un radical alkényle en $C_3$ à $C_{12}$, un radical acyle de formule CO-$R'_2$, $R'_2$ étant un radical alkyle en $C_1$ à $C_{12}$ ou un radical aralkyle en $C_7$ à $C_{12}$ éventuel-

lement substitué par des groupes alkyle ou alcoxy ;

$R_3$ est H, un radical alkyle en $C_1$ à $C_{18}$, cycloalkyle en $C_5$ à $C_8$, alcoxyalkyle en $C_2$ à $C_{12}$, alkyle dialkylamine renfermant jusqu'à 10 atomes de carbone, ou le groupe tmpH-$R_2$, tmpH représente le groupe :

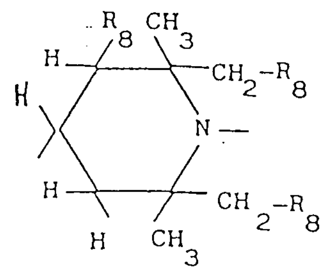

dans lequel $R_2$ est toujours lié à l'atome d'azote de la pipéridine et $R_8$ est H ou $CH_3$ ;

ii) $R_2$-tmpH-O- ;

iii)

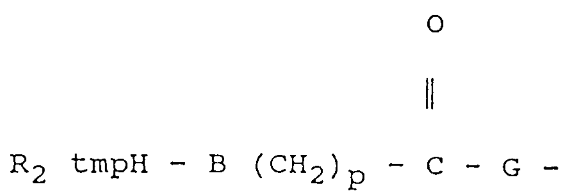

où B est O ou $NR_3$ ; p est un entier de 1 à 4; G est O, S, NH ou NH-NH ;

iv)

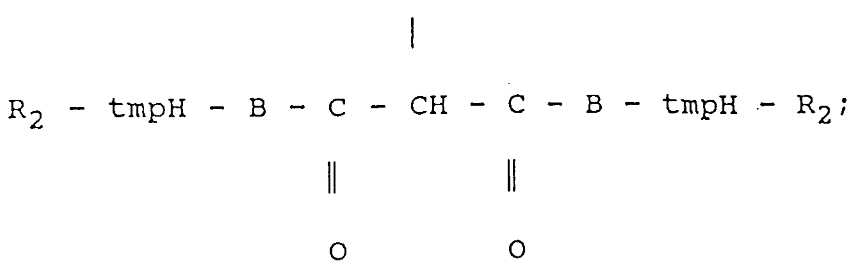

v)

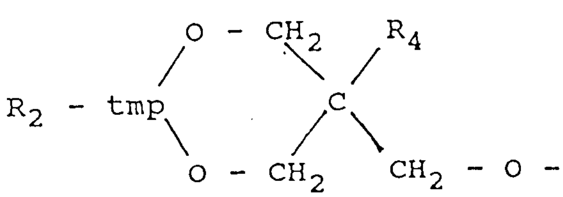

où $R_4$ est un radical alkyle en $C_1$ à $C_6$ et tmp représente le groupe :

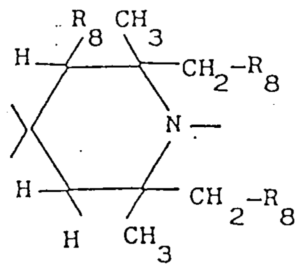

dans lequel $R_2$ est toujours lié à l'atome d'azote de la pipéridine ;

vi)

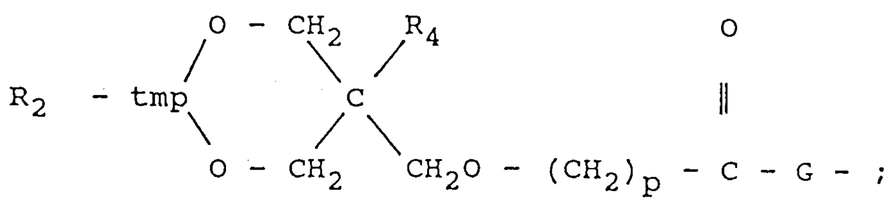

vii)

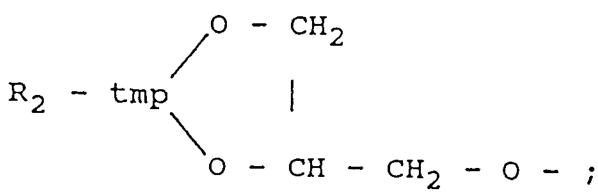

viii)

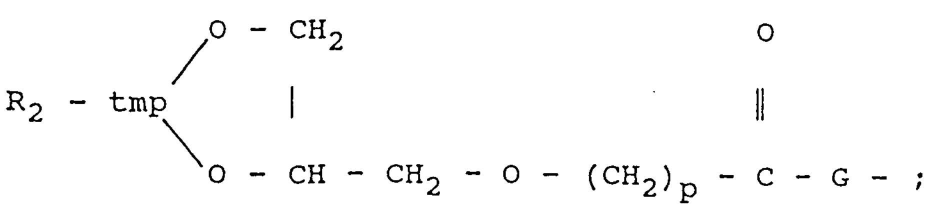

ix)

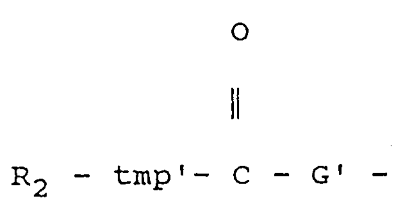

où G' est O, NH ou NH-NH et le groupe tmp' présente la structure :

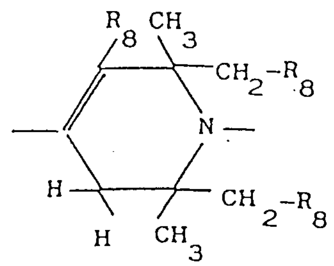

dans laquelle $R_2$ est toujours lié à l'atome d'azote de la pipéridine ;

x)

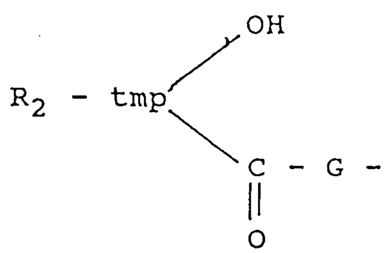

xi) une structure du type triazine de formule :

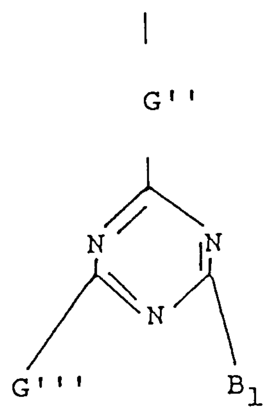

dans laquelle G'' est NH ou NH-NH ; G''' est choisi parmi (i), (ii), (v) et (vii) ;

et $B_1$ a la même signification que G'', ou il est un groupe D-$R_5$ dans lequel D est O, S, NH, $NR_7$, et dans lequel $R_5$ est un radical alkyle en $C_1$ à $C_{20}$, cycloalkyle en $C_5$ à $C_8$, aralkyle en $C_7$ à $C_{12}$ ou aryle en $C_6$ à $C_{12}$ ; et

les groupes

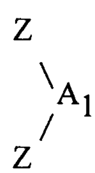

identiques ou différents, sont choisis parmi les formules suivantes :

a')

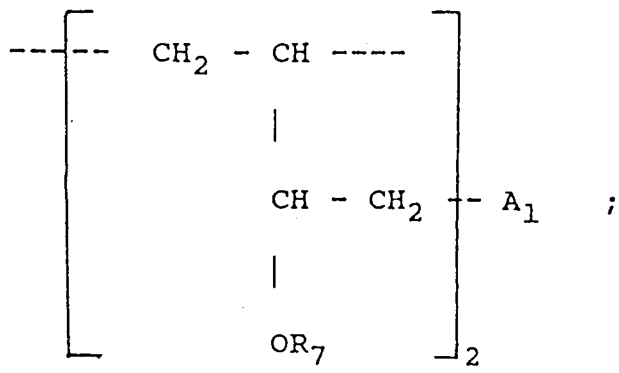

b')

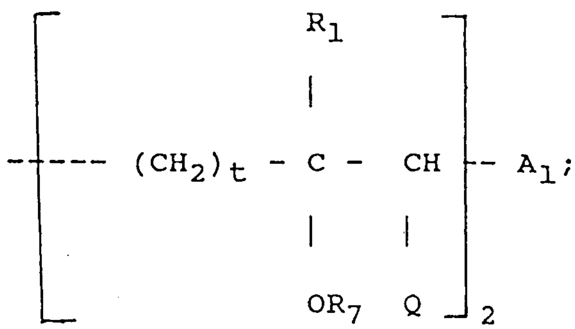

c')

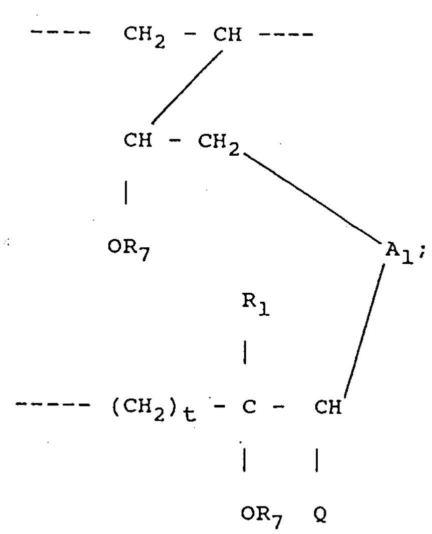

dans lesquelles le groupe $A_1$ et choisi parmi les structures suivantes :
xii)

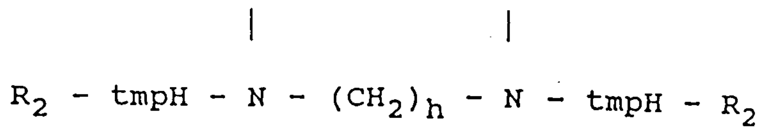

dans laquelle h est un entier de 2 à 8 ;

xiii)

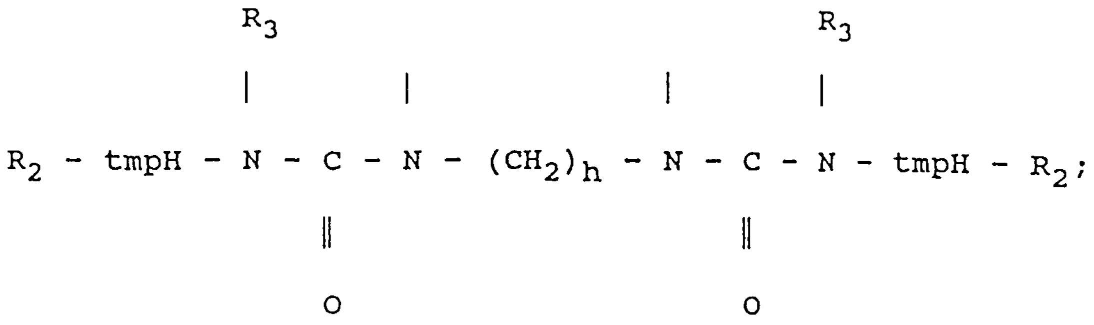

xiv)

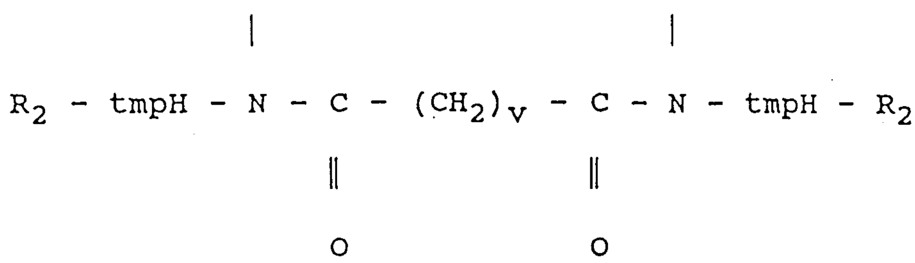

dans laquelle v est un entier de 0 à 8 ;

xv)

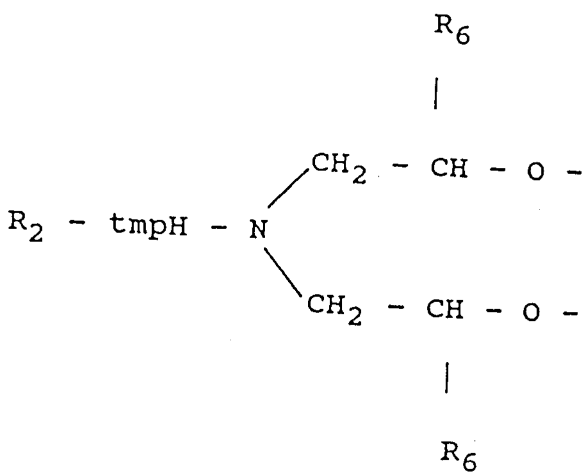

dans laquelle $R_6$ représente H ou $CH_3$ ;

xvi)

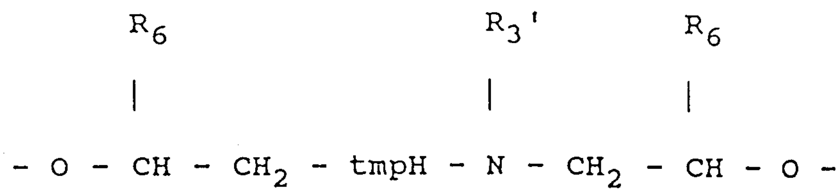

dans laquelle l'azote de la pipéridine du groupe tmpH est lié à l'atome de carbone du groupe $CH_2$, et $R_3$, a la même signification que $R_3$ si ce dernier est différent de H et du groupe $R_2$-tmpH ;

xvii)

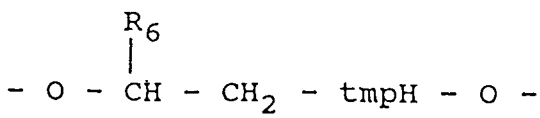

dans lequel l'azote de la pipéridine du groupe tmpH est lié à l'atome de carbone du groupe $CH_2$ ;

xviii)

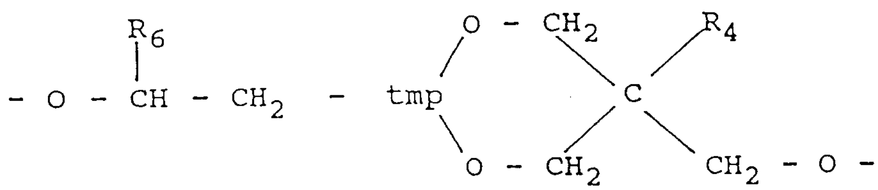

xix)

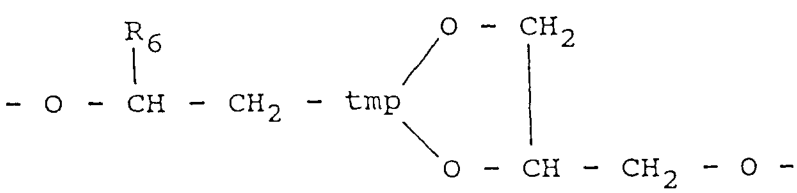

2. Dérivés selon la revendication 1, dans lesquels la chaîne polymère (P) dérive du polyéthylène, polypropylène, polybutène, polybutadiène ou de leurs copolymères, leurs poids moléculaire étant compris entre 200 et 10 000.

3. Dérivés selon la revendication 1, dans lesquels le polyalkyle pipéridine est la 2,2,6,6-tétraméthylpyridine.

4. Compositions polymères comprenant les stabilisants selon la revendication 1.

5. Compositions polymères selon la revendication 4, comprenant de 0,01 à 3 parties en poids de stabilisant pour 100 parties en poids du matériau polymère à stabiliser.

6. Compositions polymères selon la revendication 4, dans lesquelles le matériau polymère à stabiliser comprend un ou plusieurs polymères ou copolymères, ou leurs mélanges, obtenus par polymérisation séquentielle d'oléfines de formule R'''-CH=$CH_2$, dans laquelle R'' est un atome d'hydrogène, un radical alkyle renfermant 1 à 6 atomes de carbone ou un radical alkyle.